(19) Europäisches Patentamt
European Patent Office
Office européen des brevets

(11) **EP 4 182 279 B1**

(12) **FASCICULE DE BREVET EUROPEEN**

(45) Date de publication et mention
de la délivrance du brevet:
**11.09.2024 Bulletin 2024/37**

(21) Numéro de dépôt: **21749678.5**

(22) Date de dépôt: **13.07.2021**

(51) Classification Internationale des Brevets (IPC):
***C03C 17/36*** (2006.01)

(52) Classification Coopérative des Brevets (CPC):
**C03C 17/366; C03C 17/36; C03C 17/3618;
C03C 17/3681; C03C 17/3694;** C03C 2217/91

(86) Numéro de dépôt international:
**PCT/FR2021/051296**

(87) Numéro de publication internationale:
**WO 2022/013495 (20.01.2022 Gazette 2022/03)**

(54) **MATÉRIAU À FAIBLE ÉMISSIVITÉ COMPRENANT UNE COUCHE À BASE D'OXYDE DE TITANE ÉPAISSE**

MATERIAL MIT NIEDRIGER EMISSIVITÄT MIT EINER DICKEN SCHICHT AUF TITANOXIDBASIS

LOW EMISSIVITY MATERIAL COMPRISING A THICK TITANIUM OXIDE BASED LAYER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.07.2020 FR 2007446
16.07.2020 FR 2007449**

(43) Date de publication de la demande:
**24.05.2023 Bulletin 2023/21**

(60) Demande divisionnaire:
**24190727.8**

(73) Titulaire: **Saint-Gobain Glass France
92400 Courbevoie (FR)**

(72) Inventeurs:
• **LELARGE, Anne
75012 PARIS (FR)**
• **GUIMARD, Denis
75013 PARIS (FR)**

(74) Mandataire: **Saint-Gobain Recherche
Département Propriété Industrielle
39 Quai Lucien Lefranc
93300 Aubervilliers (FR)**

(56) Documents cités:
WO-A1-2006/122900    WO-A1-2009/115596
WO-A1-2009/132998    WO-A2-2006/067102
FR-A1- 2 893 023    FR-A1- 3 088 633

**Description**

L'invention concerne un matériau comprenant un substrat transparent revêtu d'un empilement de couches minces comprenant une couche métallique fonctionnelle à base d'argent. L'invention concerne également les vitrages comprenant ces matériaux ainsi que l'utilisation de tels matériaux pour fabriquer des vitrages d'isolation thermique et/ou de protection solaire.

Les couches métalliques fonctionnelles à base d'argent (ou couches d'argent) ont des propriétés de conduction électrique et de réflexion des rayonnements infrarouges (IR) avantageuses, d'où leur utilisation dans des vitrages dits « de contrôle solaire » visant à diminuer la quantité d'énergie solaire entrante et/ou dans des vitrages dits « bas émissifs » visant à diminuer la quantité d'énergie dissipée vers l'extérieur d'un bâtiment ou d'un véhicule.

Ces couches d'argent sont déposées entre des revêtements à base de matériaux diélectriques comprenant généralement plusieurs couches diélectriques (ci-après « revêtements diélectriques ») permettant d'ajuster les propriétés optiques de l'empilement. Ces couches diélectriques permettent en outre de protéger la couche d'argent des agressions chimiques ou mécaniques.

Fréquemment, de tels matériaux doivent subir des traitements thermiques, destinés à améliorer les propriétés du substrat et/ou de l'empilement de couches minces. Il peut par exemple s'agir, dans le cas de substrats en verre, de traitement de trempe thermique destinés à renforcer mécaniquement le substrat en créant de fortes contraintes de compression à sa surface,

Les documents FR 2 893 023 A1, WO 2006/122900 A1, FR 3 088 633 A1 et WO 2006/067102 A2 décrivent des matériaux comprenant un substrat transparent revêtu d'un empilement de couches comprenant au moins une couche métallique fonctionnelle a base de l'argent.

L'invention vise tout particulièrement des matériaux comprenant un substrat revêtu d'un empilement présentant une faible émissivité ou une faible résistivité par carré. L'émissivité et la résistivité (ou résistance) par carré varient de manière proportionnée. Par conséquent, il est souvent possible d'évaluer l'émissivité d'un matériau en évaluant sa résistance par carré.

De préférence, le substrat muni de l'empilement ou l'empilement seul est destiné à subir un traitement thermique à température élevée

L'invention s'intéresse également à l'obtention de ces matériaux présentant une faible émissivité sans modification significative de l'absorption suite au traitement thermique.

Enfin, il demeure essentiel que les propriétés avantageuses d'émissivité et d'absorption soient obtenues sans nuire :

- à la résistance mécanique notamment à la résistance aux rayures et à la brosse, de préférence, avant et après traitement thermique,
- à la résistance à la corrosion à chaud, et
- à la transparence se traduisant par l'absence de flou après traitement thermique.

Les propriétés optiques et électriques telles que l'émissivité des matériaux dépendent directement de la qualité des couches d'argent telle que leur état cristallin, leur homogénéité ainsi que de leur environnement. On entend par « environnement », la nature des couches à proximité de la couche d'argent et la rugosité de surface des interfaces avec ces couches.

Les traitements thermiques à température élevée tels qu'un recuit, un bombage et/ou une trempe provoquent des modifications au sein de la couche d'argent.

De plus, les traitements thermiques à température élevée rendent en général les empilements plus sensibles aux rayures. D'autre part, lorsque des rayures sont créées sur un matériau avant traitement thermique, leur visibilité augmente de manière considérable après traitement thermique.

Pour améliorer la qualité des couches métalliques fonctionnelles à base d'argent, il est connu d'utiliser sous les couches d'argent des revêtements diélectriques comprenant des couches diélectriques à fonction stabilisante destinées à favoriser le mouillage et la nucléation de la couche d'argent. Des couches diélectriques à base d'oxyde de zinc cristallisé sont notamment utilisées à cette fin. En effet, l'oxyde de zinc déposé par le procédé de pulvérisation cathodique cristallise sans nécessiter de traitement thermique additionnel. La couche à base d'oxyde de zinc peut donc servir de couche de croissance épitaxiale pour la couche d'argent.

Une autre piste pour prévenir la dégradation des couches d'argent réside sur le choix de la couche située au-dessus et au contact de la couche d'argent. Parmi les propositions connues figurent l'utilisation des couches dites de blocage ou des couches diélectriques à base d'oxyde de zinc cristallisé. L'objectif est de protéger les couches fonctionnelles d'une éventuelle dégradation lors du dépôt du revêtement diélectrique supérieur et/ou lors d'un traitement thermique.

Les couches de blocage sont généralement à base d'un métal choisi parmi le nickel, le chrome, le titane, le niobium, ou d'un alliage de ces différents métaux. Les différents métaux ou alliages cités peuvent également être partiellement oxydés, notamment présenter une sous-stoechiométrie en oxygène (par exemple $TiO_x$ ou $NiCrO_x$).

Ces couches de blocage sont très fines, normalement d'une épaisseur inférieure à 2 nm et sont susceptibles à ces épaisseurs d'être partiellement oxydées pendant un traitement thermique. D'une manière générale, ces couches de blocage sont des couches sacrificielles, susceptibles de capter l'oxygène provenant de l'atmosphère ou du substrat, évitant ainsi l'oxydation de la couche d'argent.

L'utilisation de ces fines couches de blocage ne permet pas d'obtenir des matériaux suffisamment performants présentant notamment une résistivité suffisamment faible.

De bons résultats en terme de résistivité ont été obtenus jusqu'alors avec un matériau ne comprenant pas de couche de blocage et dont chaque revêtement diélectrique comprend au moins une couche comprenant du silicium. La couche d'argent est située au contact des deux couches d'oxyde de zinc cristallisé située respectivement au-dessus et en dessous de la couche d'argent. Des matériaux de ce type comprenant la séquence ZnO/Ag/ZnO sont qualifiés de matériau de référence dans la présente demande.

Cette solution consistant à utiliser uniquement des couches à base d'oxyde de zinc cristallisé en-dessous et au-dessus de l'argent permet d'obtenir des valeurs de résistivité avantageuse. Toutefois, les inconvénients suivants demeurent :

- apparition de flou après traitement thermique,
- apparition de points de corrosion après traitement thermique.

Le demandeur a découvert que l'utilisation d'une couche d'oxyde de titane épaisse située au-dessus et au-contact de la couche fonctionnelle à base d'argent, dans un empilement particulier, permet de pallier ces inconvénients.

De manière surprenante, l'invention permet en outre de diminuer encore davantage la résistivité après traitement thermique par rapport à un matériau de référence.

L'invention concerne donc un matériau tel que défini dans la revendication indépendante 1.

La solution de l'invention permet d'obtenir après traitement thermique des valeurs de résistivité avantageuses, sans flou, ni apparition de point de corrosion. On observe également une amélioration significative des propriétés mécaniques de résistance aux rayures suite au traitement thermique se traduisant par :

- des rayures moins visibles et
- si présentes, l'absence de corrosion à chaud de ces rayures existantes.

Le demandeur a également découvert que l'utilisation d'une couche d'oxyde de titane épaisse obtenue à partir d'une cible céramique dans une atmosphère ne comprenant pas d'oxygène permet d'obtenir un gain en résistivité avant et après traitement thermique.

Le demandeur a également découvert que l'utilisation d'une couche d'oxyde de titane épaisse obtenue à partir d'une cible céramique dans une atmosphère contrôlée comprenant de faibles quantités d'oxygène, c'est à dire des quantités inférieures à 10 % en débit volumique d'oxygène permet d'obtenir par rapport au matériau de référence :

- après traitement thermique, les valeurs de résistivité les plus faibles,
- avant traitement thermique, des propriétés mécaniques de résistance à la brosse au moins équivalentes.

Cette solution permet également après traitement thermique, l'amélioration de la résistivité sans nuire à l'absorption.

Le demandeur à découvert de manière surprenante que les meilleures valeurs de résistivité et d'absorption sont obtenues pour un empilement comprenant une couche épaisse d'oxyde de titane déposée avec un débit volumique de 2% d'oxygène environ par rapport aux empilements comprenant une couche d'oxyde de titane déposée :

- sans oxygène,
- avec 5 % et plus d'oxygène dans l'atmosphère de dépôt.

Une hypothèse probable à ces effets avantageux est que :

- il faut un peu d'oxygène lors du dépôt de la couche épaisse d'oxyde de titane pour :

   i) favoriser l'adhésion entre la couche d'argent et la couche de blocage épaisse à base d'oxyde de titane (Ag/TiOx) et donc favoriser une bonne résistance mécanique se traduisant par de bon résultat d'EBT,
   ii) faire en sorte que l'oxyde de titane déposé ne soit pas absorbant,

- il ne faut pas trop d'oxygène cependant, car si les quantités d'oxygène sont trop importantes, la couche d'argent se trouve dégradée (oxydation), ce qui se traduit par une augmentation de la résistance par carré, voire également de l'absorption si il y a vraiment trop d'oxygène.

A noter qu'une dégradation de la résistance par carré avant traitement thermique peut être observée si il y a trop d'oxygène, mais que cette dégradation peut disparaitre après traitement thermique. Le traitement thermique « guérit » les défauts crées par un excès d'oxygène. En revanche, si il y a vraiment trop d'oxygène, la dégradation de résistance par carré (vs. Matériau de référence) est maintenue après traitement thermique.

Il existe donc un seuil limite de proportion en oxygène au-delà duquel la résistivité et l'absorption sont dégradées.

L'invention permet également d'obtenir une amélioration du facteur solaire. Cette amélioration est en partie lié à la présence d'une couche haut-indice au contact de la couche d'argent. L'effet sur le facteur solaire permet d'obtenir :

- pour une épaisseur donnée d'agent, un plus haut facteur solaire, ou
- pour une émissivité donnée, une plus faible épaisseur pour la couche d'argent.

L'invention dans sa définition la plus large permet donc la mise au point d'un matériau comprenant un substrat revêtu d'un empilement comprenant au moins une couche fonctionnelle à base d'argent présentant, suite à un traitement thermique de type bombage, trempe ou recuit, par rapport à un matériau de référence à même épaisseur de couche d'argent :

- une faible émissivité et un facteur solaire et une transmission lumineuse plus élevés,
- une faible visibilité de rayures (si présente) suite au traitement thermique, et
- une résistance à la corrosion à chaud significativement améliorée.

Selon la variante avantageuse consistant à déposer la couche d'oxyde de titane dans une atmosphère contrôlée, ces améliorations sont obtenues :

- après traitement thermique sans être accompagnées d'une dégradation de l'absorption et
- avant traitement thermique avec une amélioration de la résistance au test à la brosse et avec peu ou pas de dégradation de l'absorption avant traitement thermique.

Cette solution permet d'obtenir après traitement thermique des valeurs de résistivité avantageuses, sans flou, ni apparition de point de corrosion. On observe également une amélioration significative des propriétés mécaniques de résistance aux rayures suite au traitement thermique se traduisant par :

- des rayures moins visibles et

- si présentes, l'absence de corrosion à chaud de ces rayures existantes.

Toutefois, la seule présence d'une couche d'oxyde de titane épaisse ne permet pas :

- de limiter l'augmentation de l'absorption avant traitement thermique,
- d'obtenir une résistance mécanique satisfaisante au test de résistance à la brosse avant et après traitement thermique.

Le demandeur a donc cherché comment améliorer encore davantage ces propriétés. Il a découvert de manière surprenante que l'utilisation d'une couche à base d'oxyde de titane associée avec une couche à base d'oxyde de zinc et d'étain particulière permettait de pallier ces inconvénients mais également d'apporter en outre d'autres propriétés avantageuses.

L'invention concerne également un matériau comprenant un substrat transparent revêtu d'un empilement de couches comprenant au moins une couche métallique fonctionnelle à base d'argent et au moins deux revêtements diélectriques, chaque revêtement diélectrique comportant au moins une couche diélectrique, de manière à ce que chaque couche métallique fonctionnelle soit disposée entre deux revêtements diélectriques, l'empilement comprend :

- au moins une couche à base d'oxyde de titane présentant une épaisseur supérieure ou égale à 3 nm ou un revêtement à base d'oxyde de titane comprenant au moins une couche à base d'oxyde de titane présentant de préférence une épaisseur supérieure ou égale à 3 nm, la couche à base d'oxyde de titane est située au-dessus et au contact d'une couche métallique fonctionnelle à base d'argent,

- une couche à base d'oxyde de zinc et d'étain comprenant au moins 20 % en masse d'étain par rapport à la masse totale de zinc et d'étain, située au-dessus et au contact de la couche à base d'oxyde de titane.

Selon ce mode de réalisation, au moins un revêtement diélectrique ou chaque revêtement diélectrique comprend au moins une couche comprenant du silicium.

Le demandeur a découvert que ce mode de réalisation convient bien également lorsque le substrat ne subit pas de traitement thermique.

Selon ce mode de réalisation, la couche à base d'oxyde de titane est également avantageusement déposée à partir d'une cible céramique, notamment sous stoechiométrique, dans une atmosphère contrôlée comprenant de l'oxygène.

L'invention combinant une couche épaisse d'oxyde de titane au contact d'une couche d'oxyde de zinc et d'étain permet d'obtenir par rapport au matériau de référence :

- une amélioration de la résistivité avec l'obtention de gain en résistance carré d'au moins 5%, voire de 10 % ou plus, pour certaines structures de l'invention, à la fois avant et après traitement thermique,
- une amélioration des propriétés mécaniques de résistance à la brosse avant et après traitement thermique.

Dans certains modes de réalisation, l'amélioration de la résistivité est obtenue sans augmentation de l'absorption, et ce, avant et après traitement thermique.

L'invention selon ce mode de réalisation permet donc la mise au point d'un matériau comprenant un substrat revêtu d'un empilement comprenant au moins une couche fonctionnelle à base d'argent présentant, suite à un traitement thermique de type bombage, trempe ou recuit, par rapport à un matériau de référence à même épaisseur de couche d'argent :

- une faible émissivité sans augmentation de l'absorption,
- un facteur solaire et une transmission lumineuse plus élevés,
- une faible visibilité de rayures (si présente) suite au traitement thermique,
- une bonne résistance au test à la brosse, et
- une résistance à la corrosion à chaud significativement améliorée.

L'invention selon ce mode de réalisation permet donc la mise au point d'un matériau comprenant un substrat revêtu d'un empilement comprenant au moins une couche fonctionnelle à base d'argent présentant, avant ou sans traitement thermique :

- une faible émissivité sans augmentation de l'absorption et
- une bonne résistance au test à la brosse.

Selon un mode de réalisation particulièrement avantageux le revêtement à base d'oxyde de titane est un revêtement comprenant un gradient d'oxydation (ci-après revêtement à gradient d'oxydation) situé au-dessus et au contact d'une couche métallique fonctionnelle à base d'argent. La partie du revêtement à gradient d'oxydation en contact avec la couche fonctionnelle est moins oxydée que la partie de ce revêtement plus éloignée de la couche fonctionnelle. Ce mode de réalisation combinant un revêtement à base d'oxyde de titane à gradient d'oxydation et une couche à base d'oxyde de zinc et d'étain permet d'obtenir les meilleures performances.

Le substrat revêtu de l'empilement ou l'empilement seulement peut être destiné à subir un traitement thermique. Cependant, la présente invention concerne également un matériau comprenant le substrat revêtu non traité thermiquement.

Le demandeur a découvert que les modes de réalisation décrits ci-après conviennent également lorsque le substrat ne subit pas de traitement thermique.

L'invention concerne un matériau comprenant un substrat transparent revêtu d'un empilement de couches comprenant au moins une couche métallique fonctionnelle à base d'argent et au moins deux revêtements diélectriques, chaque revêtement diélectrique comportant au moins une couche diélectrique, de manière à ce que chaque couche métallique fonctionnelle soit disposée entre deux revêtements diélectriques, l'empilement comprend :

- au moins une couche à base d'oxyde de titane présentant une épaisseur supérieure ou égale à 3 nm ou un revêtement à base d'oxyde de titane présentant une épaisseur supérieure ou égale à 3 nm comprenant au moins une couche à base d'oxyde de titane, la couche d'oxyde de titane est située au-dessus et au contact d'une couche métallique fonctionnelle à base d'argent,
- une couche à base d'oxyde de zinc et d'étain comprenant au moins 20 % en masse d'étain par rapport à la masse totale de zinc et d'étain, située au-dessus et au contact de la couche à base d'oxyde de titane,

- une couche comprenant du silicium, située au-dessus et au contact de la couche à base d'oxyde de zinc et d'étain, de préférence une couche à base de nitrure de silicium et/ou d'aluminium.

Selon ce mode de réalisation, la couche à base d'oxyde de titane est avantageusement déposée à partir d'une cible céramique, notamment sous stoechiométrique, dans une atmosphère contrôlée comprenant de l'oxygène.

La solution de l'invention convient tout particulièrement dans le cas d'empilements à plusieurs couches fonctionnelles à base d'argent, notamment les empilements à deux ou trois couches fonctionnelles qui sont particulièrement fragiles du point de vue des rayures.

La présente invention convient également tout particulièrement dans le cas d'empilements à une seule couche fonctionnelle à base d'argent destinés à des applications où les empilements sont fortement sujets à la corrosion à chaud.

L'invention concerne également :

- un vitrage comprenant un matériau selon l'invention,
- un vitrage comprenant un matériau selon l'invention monté sur un véhicule ou sur un bâtiment, et
- le procédé de préparation d'un matériau ou d'un vitrage selon l'invention,
- l'utilisation d'un vitrage selon l'invention en tant que vitrage de contrôle solaire et/ou bas émissif pour le bâtiment ou les véhicules,
- un bâtiment, un véhicule ou un dispositif comprenant un vitrage selon l'invention.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une (ou plusieurs) couche(s) intercalée(s) entre ces deux couches (ou couche et revêtement).

Toutes les caractéristiques lumineuses décrites sont obtenues selon les principes et méthodes de la norme européenne EN 410 se rapportant à la détermination des caractéristiques lumineuses et solaires des vitrages utilisés dans le verre pour la construction.

On considère que la lumière solaire entrant dans un bâtiment va de l'extérieur vers l'intérieur.

Selon l'invention, les caractéristiques lumineuses sont mesurées selon l'illuminant D65 à 2° perpendiculairement au matériau monté dans un double vitrage :

- TL correspond à la transmission lumineuse dans le visible en %,
- Rext correspond à la réflexion lumineuse extérieure dans le visible en %, observateur côté espace extérieur,
- Rint correspond à la réflexion lumineuse intérieure dans le visible en %, observateur coté espace intérieur,
- a*T et b*T correspondent aux couleurs en transmission a* et b* dans le système L*a*b*,
- a*Rext et b*Rext correspondent aux couleurs en réflexion a* et b* dans le système L*a*b*, observateur côté espace extérieur,
- a*Rint et b*Rint correspondent aux couleurs en réflexion a* et b* dans le système L*a*b*, observateur côté espace intérieur.

Les caractéristiques préférées qui figurent dans la suite de la description sont applicables aussi bien au matériau selon l'invention que, le cas échéant, au vitrage ou au procédé selon l'invention.

Les matériaux de l'invention peuvent être utilisés à la fois en version non-trempées et en version trempées.

La présente invention concerne le substrat revêtu non traité thermiquement. L'empilement peut ne pas avoir subi un traitement thermique à une température supérieure à 500 °C, de préférence 300 °C.

La présente invention concerne le matériau traité thermiquement. Les traitements thermiques sont choisis parmi :

- un recuit, par exemple un recuit rapide,
- une trempe et/ou un bombage.

Le matériau, c'est-à-dire le substrat transparent revêtu de l'empilement, peut avoir subi un traitement thermique à température élevée. L'empilement et le substrat peuvent avoir été soumis à un traitement thermique à une température élevée tel qu'une trempe, un recuit ou un bombage.

Il est également possible de traiter thermiquement uniquement l'empilement. Dans ce cas, l'empilement seulement peut avoir subi un traitement thermique.

Dans ces deux cas, l'empilement peut avoir subi un traitement thermique à une température supérieure à 300 °C, de préférence 500 °C. La température de traitement thermique (au niveau de l'empilement) est supérieure à 300 °C, de préférence supérieure à 400 °C, et mieux supérieure à 500 °C.

Selon l'invention, il est également possible de réaliser un recuit thermique rapide (« Rapid Thermal Process ») tel qu'un recuit laser ou lampe flash. Le recuit thermique rapide est par exemple décrit dans les demandes WO2008/096089 et WO2015/185848. Dans ces cas, seul l'empilement est soumis à un traitement thermique. Lors de ce type de traitement, on porte chaque point de l'empilement à une température d'au moins 300°C en maintenant une température inférieure ou égale à 150°C en tout point de la face du substrat opposée à celle sur laquelle se situe l'empilement. Ce procédé présente l'avantage de ne chauffer que l'empilement, sans échauffement significatif de la totalité du substrat.

Dans le cas d'un traitement laser, les matériaux revêtus peuvent être traités à l'aide d'une ligne laser formée à partir de sources laser de type diodes laser InGaAs ou laser à disque Yb :YAG. Ces sources continues émettent à une longueur d'onde comprise entre 900 et 1100 nm. La ligne laser a une longueur de l'ordre de 3,3 m, égale à la largeur 1 du substrat, et une largeur à mi-hauteur FWHM moyenne entre 45 et 100 $\mu$m.

Les matériaux sont disposés sur un convoyeur à rouleaux de manière à défiler selon une direction X, parallèlement à sa longueur. La ligne laser est fixe et positionnée au-dessus de la surface revêtue du substrat avec sa direction longitudinale Y s'étendant perpendiculairement à la direction X de défilement du substrat, c'est-à-dire selon la largeur du substrat, en s'étendant sur toute cette largeur.

La position du plan focal de la ligne laser est ajustée pour se situer dans l'épaisseur du revêtement fonctionnel lorsque le substrat est positionné sur le convoyeur. La puissance surfacique de la ligne laser au niveau du plan focal est inférieur à 100kW/cm2. On a fait défiler le substrat sous la ligne laser à une vitesse d'environ 8 m/min.

L'empilement peut donc avoir été soumis à un recuit thermique rapide dans lequel on porte chaque point de l'empilement à une température d'au moins 300°C en maintenant une température inférieure ou égale à 150°C en tout point de la face du substrat opposée à celle sur laquelle se situe l'empilement.

Il est également possible de combiner les traitements thermiques. Par exemple, il est possible de réaliser un recuit thermique rapide suivi d'une trempe.

L'empilement et le substrat peuvent avoir été soumis à un traitement thermique à une température élevée supérieure à 500 °C tel qu'une trempe, un recuit ou un bombage.

Le substrat revêtu de l'empilement peut être est un verre bombé ou trempé.

L'empilement est déposé par pulvérisation cathodique assistée par un champ magnétique (procédé magnétron). Selon ce mode de réalisation avantageux, toutes les couches de l'empilement sont déposées par pulvérisation cathodique assistée par un champ magnétique.

Sauf mention contraire, les épaisseurs évoquées dans le présent document sont des épaisseurs physiques et les couches sont des couches minces. On entend par couche mince, une couche présentant une épaisseur comprise entre 0,1 nm et 100 micromètres.

L'empilement comprend au moins une couche à base d'oxyde de titane située au-dessus et au contact d'une couche métallique fonctionnelle à base d'argent ayant une épaisseur supérieure à égale à 3 nm. Cela signifie que la couche est une couche à base d'oxyde de titane sur toute cette épaisseur.

Le revêtement à base d'oxyde de titane peut comprendre au moins une couche à base d'oxyde de titane.

Dans certains modes de réalisation, le revêtement comprend plusieurs couches à base d'oxyde de titane.

Le revêtement à base d'oxyde de titane présente une épaisseur :

- supérieure à 3 nm, supérieure à 4 nm, supérieure ou égale à 5 nm,
- inférieure ou égale à 30 nm, inférieure ou égale à 25 nm, inférieure ou égale à 20 nm, inférieure ou égale à 15 nm, inférieure ou égale à 10 nm, inférieure ou égale à 8 nm.

Les couches à base d'oxyde de titane comprennent au moins 50 %, au moins 60 %, au moins 70 %, au moins 80 %, au moins 95,0 %, au moins 96,5 % et mieux au moins 98,0 % en masse de titane par rapport à la masse de tous les éléments constituant la couche à base d'oxyde de titane autre que de l'oxygène.

Les couches à base d'oxyde de titane peuvent comprendre ou être constituées d'éléments autres que le titane et l'oxygène. Ces éléments peuvent être choisis parmi le silicium, le chrome et le zirconium. De préférence, les éléments sont choisis parmi le zirconium.

De préférence, la couche à base d'oxyde de titane comprend au plus 35 %, au plus 20 % ou au plus 10 % en masse d'éléments autres que du titane par rapport à la masse de tous les éléments constituant la couche à base d'oxyde de titane autres que de l'oxygène.

Les couches à base d'oxyde de titane peuvent avoir une épaisseur :

- supérieure ou égale à 2 nm, supérieure ou égale à 3 nm, supérieure ou égale à 4 nm, supérieure ou égale à 5 nm, et/ou
- inférieure ou égale à 30 nm, inférieure ou égale à 25 nm, inférieure ou égale à 20 nm, inférieure ou égale à 15 nm, inférieure ou égale à 10 nm, inférieure ou égale à 8 nm, inférieure ou égale à 4 nm.

Les couches à base d'oxyde de titane peuvent être obtenues :

- par pulvérisation cathodique,
- à partir d'une cible métallique de titane ou d'une cible céramique à base d'oxyde de titane de préférence sous stoechiométrique.

Lorsque la couche à base d'oxyde de titane est obtenue à partir d'une cible métallique, l'atmosphère de dépôt comprend des proportions importantes d'oxygène.

Les couches à base d'oxyde de titane sont de préférence obtenues à partir d'une cible céramique d'oxyde de titane, de préférence sous stoechiométrique en oxygène, dans une atmosphère comprenant de l'oxygène ou sans oxygène. La quantité d'oxygène dans l'atmosphère de dépôt peut être adaptée en fonction des propriétés recherchées.

Delon le mode de réalisation préféré, une couche à base d'oxyde de titane est déposée à partir d'une cible céramique, notamment sous stoechiométrique, dans une atmosphère contrôlée comprenant de l'oxygène. De préférence, toute la couche à base d'oxyde de titane est déposée à partir d'une cible céramique, notamment sous stoechiométrique, dans une atmosphère contrôlée comprenant de l'oxygène.

La couche à base d'oxyde de titane peut être déposée à partir d'une cible céramique de $TiO_x$ avec x compris entre 1,5 et 2.

La couche à base d'oxyde de titane peut être déposée à partir d'une cible céramique de $TiO_x$ sous stoechiométrique, où x est un nombre différent de la stoechiométrie de l'oxyde de titane $TiO_2$, c'est-à-dire différent de 2 et de préférence inférieur à 2, en particulier compris entre 0,75 fois et 0,99 fois la stoechiométrie normale de l'oxyde. TiOx peut être en particulier tel que $1,5 < x < 1,98$ ou $1,5 < x < 1,7$, voire $1,7 < x < 1,95$.

La couche à base d'oxyde de titane peut être déposée dans une atmosphère ne contenant pas d'oxygène ou dans une atmosphère contrôlée comprenant de l'oxygène.

En effet, si on cherche à obtenir uniquement un gain en résistivité avant et après traitement thermique, une atmosphère de dépôt sans oxygène peut être utilisée.

En revanche, si on cherche à ne pas modifier l'absorption après traitement thermique, une atmosphère contrôlée en oxygène sera utilisé. Selon ce mode de réalisation, la couche à base d'oxyde de titane est déposée à partir d'une cible céramique, notamment sous stoechiométrique, dans une atmosphère contrôlée comprenant de l'oxygène.

Selon l'invention, on entend par « atmosphère contrôlée comprenant de l'oxygène », une atmosphère comprenant une quantité optimisée d'oxygène pour obtenir après traitement thermique un gain en résistivité sans nuire à l'absorption d'une part, et à la résistance à la brosse avant et après recuit (EBT), d'autre part.

L'atmosphère de dépôt comprend un mélange de gaz noble (He, Ne, Xe, Ar, Kr) et d'oxygène. Le gaz noble est de préférence de l'argon.

Les paramètres suivants permettent de définir les conditions d'un dépôt par pulvérisation cathodique :

- la pression de dépôt,
- la composition des gaz en débit volumique (unité sccm « standard centimètre cube par minute »).

L'atmosphère contrôlée permettant d'obtenir les effets avantageux de l'invention a été notamment obtenue avec les paramètre suivants :

- la pression dans l'enceinte de dépôt est comprise entre 1 et 15 $\mu$bar, de préférence 2 et 10 $\mu$bar ou 2 et 8 $\mu$bar,
- l'atmosphère de dépôt comprend un mélange d'argon et d'oxygène.

L'atmosphère contrôlée permettant d'obtenir les effets avantageux de l'invention a été obtenue avec un pourcentage en débit volumique d'oxygène compris entre 0 et 10 %, entre 0,1 et 10%, entre 0,1 et 5 %, entre 0,1 et 4%, entre 0,5 et 3 %, entre 1 et 2,5 % ou entre 1,5 et 2 %.

Le seuil maximal d'oxygène peut varier dans une certaine mesure en fonction, par exemple :

- de la nature de la cible de TiOx, notamment de sa sous-stoechiométrie en oxygène ou
- de la puissance.

En effet, si une faible puissance de dépôt est utilisé, les quantités en débit volumique d'oxygène pouvant être utilisées lors du dépôt seront plus faibles car le TiOx se dépose plus lentement et est donc plus susceptible de s'oxyder.

L'homme du métier est en mesure de définir une atmosphère contrôlée satisfaisante en faisant varier dans une certaine mesure ces paramètres. L'homme du métier est notamment parfaitement en mesure de déterminer la puissance à appliquer à la cible et les débits volumiques d'oxygène et de gaz nobles.

Pour cela, pour une pression de dépôt donnée, l'homme du métier est en mesure de réaliser des ajouts croissants d'oxygène afin de déterminer la gamme de proportion d'oxygène qui permet d'abaisser la résistivité après traitement thermique sans nuire à l'absorption.

De préférence, le revêtement à base d'oxyde de titane comprend une première couche à base d'oxyde de titane au contact de la couche fonctionnelle à base d'argent déposée à partir d'une cible céramique, notamment sous stoechiométrique, dans une atmosphère oxydante dont le pourcentage en débit volumique d'oxygène représente entre 0 et 5 %, entre 0 et 4 %, entre 0,1 et 4 %, entre 0,5 et 4 %, entre 0 et 3 %, entre 0,1 et 3 %, entre 0,5 et 3 %, entre 0,1 et 2,5 % ou entre 0,5 et 2 %.

Le revêtement à base d'oxyde de titane peut comprendre au moins une couche à base d'oxyde de titane. Dans certain mode de réalisation, le revêtement comprend plusieurs couches à base d'oxyde de titane.

Selon un mode de réalisation avantageux, le revêtement à base d'oxyde de titane est un revêtement comprenant un gradient d'oxydation à base d'oxyde de titane situé au-dessus et au contact d'une couche métallique fonctionnelle à base d'argent, la partie du revêtement à gradient d'oxydation en contact avec la couche fonctionnelle est moins oxydée que la partie de ce revêtement plus éloignée de la couche fonctionnelle.

Selon l'invention, le revêtement d'oxyde de titane est décrit tel qu'il est déposé, c'est à dire avant un éventuel traitement thermique ou avant un éventuel stockage long. En effet, un traitement thermique à température élevée ou un stockage long peuvent générer des modifications au sein de couches ou revêtement. Ces modifications peuvent notamment correspondre à un réarrangement des atomes d'oxygène au sein du revêtement rendant plus difficile l'observation du gradient.

Le revêtement à gradient d'oxydation peut comprendre :

- une couche d'oxyde de titane comprenant un gradient en oxygène,
- au moins deux couches d'oxyde de titane comprenant des proportions d'oxygène différentes.

Les couches à base d'oxyde de titane sont de préférence déposées à partir d'une cible céramique d'oxyde de titane dans les conditions définies ci-avant.

Le revêtement à gradient d'oxydation peut comprendre au moins une couche à base d'oxyde de titane déposée à partir d'une cible céramique, notamment sous stoechiométrique, dans une atmosphère contrôlée comprenant de l'oxygène, de préférence dans une atmosphère contrôlée comprenant de l'oxygène. La couche à base d'oxyde de titane peut être déposée avec un pourcentage d'oxygène en débit volumique représentant entre 0,1 et 10 %.

Le revêtement à gradient d'oxydation peut comprendre au moins deux couches d'oxyde de titane comprenant chacune des proportions d'oxygène différentes, c'est à dire des degrés d'oxydation différents.

Dans ce cas, le revêtement est obtenu par dépôt d'au moins deux couches consécutives à base d'oxyde de titane. Ce dépôt en plusieurs étapes permet d'obtenir majoritairement dans le revêtement une couche d'oxyde de titane avec une grande quantité d'oxygène, tout en protégeant la couche fonctionnelle à base d'argent d'une première couche d'oxyde de titane faiblement oxydée. L'absorption de l'empilement avant traitement thermique est alors fortement réduite.

Le revêtement à gradient d'oxydation peut également comprendre une première couche déposée à partir d'une cible céramique, notamment sous stoechiométrique, dans une atmosphère sans oxygène.

Le revêtement à gradient d'oxydation peut comprendre une première couche à base d'oxyde de titane déposée à partir d'une cible céramique, notamment sous stoechiométrique, dans une atmosphère oxydante dont le pourcentage en débit volumique d'oxygène représente entre 0 et 5 %, entre 0 et 4 %, entre 0,1 et 4 %, entre 0,5 et 4 %, entre 0 et 3 %, entre 0,1 et 3 %, entre 0,5 et 3 %, entre 0,1 et 2,5 % ou entre 0,5 et 2 %.

La quantité d'oxygène dans la première couche à base d'oxyde de titane doit être relativement faible pour ne pas dégrader la couche fonctionnelle à base d'argent. Pour cela on peut utiliser une première couche déposée à partir d'une cible céramique, notamment sous stoechiométrique, dans une atmosphère sans oxygène ou avec très peu d'oxygène. Toutefois, utiliser un peu d'oxygène contribue à une meilleure résistance au test à la brosse sans induire de pénalité en absorption trop importante, notamment avant traitement thermique.

L'épaisseur de la première couche à base d'oxyde de titane peut être aussi fine que celle d'une couche de blocage standard (<1nm), tant que la couche fonctionnelle à base d'argent ne s'avère pas dégradée par l'oxygène présent pendant le dépôt de la couche suivante à base d'oxyde de titane, déposée avec plus d'oxygène que la première.

La première couche a une épaisseur comprise entre 0,2 et 4nm. La première couche peut avoir une épaisseur comprise inférieure à 3 nm, inférieure à 2 nm, inférieure à 1 nm ou inférieure à 0,5 nm.

Le revêtement à gradient d'oxydation comprend une deuxième couche à base d'oxyde de titane déposée à partir d'une cible céramique, notamment sous stoechiométrique, dans une atmosphère comprenant des proportions d'oxygène plus élevées que celle utilisées pour la première couche.

La deuxième couche à base d'oxyde de titane peut être déposée à partir d'une cible métallique ou d'une cible céramique.

La deuxième couche à base d'oxyde de titane peut être déposée à partir d'une cible céramique notamment sous stoechiométrique, dans une atmosphère oxydante dont le pourcentage d'oxygène en débit volumique représente entre 1 et 10 %, entre 1,5 et 8 %, entre 2 et 5 %.

La deuxième couche à base d'oxyde de titane a une épaisseur comprise entre 0,2 et 30 nm, entre 2 et 20 nm ou entre 5 et 15 nm.

La deuxième couche à base d'oxyde de titane peut avoir une épaisseur :

- supérieure à 0,5 nm, supérieure à 1 nm, supérieure à 2 nm, supérieure à 3 nm, supérieure à 4 nm, supérieure à 5 nm,
- inférieure à 30 nm, inférieure à 20 nm, inférieure à 15 nm ou inférieure à 10 nm.

Le revêtement à gradient d'oxydation peut également comprendre une seule couche d'oxyde de titane comprenant un gradient en oxygène.

Un revêtement à base d'oxyde de titane comprenant une seule couche à gradient en oxygène peut être obtenu :

- par pulvérisation cathodique,
- dans une atmosphère comprenant un mélange de gaz neutre et d'oxygène, en augmentant progressivement les débits d'oxygène présent dans l'atmosphère,
- à partir d'une cible métallique de titane ou d'une cible céramique à base d'oxyde de titane de préférence sous stoechiométrique.

Dans ce cas, on augmente progressivement le débit volumique d'oxygène dans l'atmosphère de dépôt au fur et à mesure que la couche à base d'oxyde de titane se dépose. La partie du revêtement à gradient d'oxydation en contact avec la couche fonctionnelle est moins oxydée que la partie de ce revêtement plus éloignée de la couche fonctionnelle.

Typiquement, lorsque la cible est une cible céramique sous stoechiométrique en oxygène, les proportions d'oxygène dans l'atmosphère de dépôt peuvent varier de 0% à 10%, de préférence de 0 à 5%.

Selon l'invention, l'empilement comprend au moins une couche métallique fonctionnelle à base d'argent.

La couche métallique fonctionnelle à base d'argent, avant ou après traitement thermique, comprend au moins 95,0 %, de préférence au moins 96,5 % et mieux au moins 98,0 % en masse d'argent par rapport à la masse de la couche fonctionnelle.

De préférence, la couche métallique fonctionnelle à base d'argent avant traitement thermique comprend moins de 1,0 % en masse de métaux autres que de l'argent par rapport à la masse de la couche métallique fonctionnelle à base d'argent.

L'épaisseur de la couche fonctionnelle à base d'argent est comprise de 5 à 25 nm, 8 à 20 nm ou de 8 à 15 nm.

L'empilement de couches minces comprend au moins une couche fonctionnelle et au moins deux revêtements diélectriques comportant au moins une couche diélectrique, de manière à ce que chaque couche fonctionnelle soit disposée entre deux revêtements diélectriques.

L'empilement de couches minces peut comprendre au moins deux couches fonctionnelles métalliques à base d'argent et au moins trois revêtements diélectriques comportant au moins une couche diélectrique, de manière à ce que chaque couche fonctionnelle soit disposée entre deux revêtements diélectriques.

L'empilement de couches minces peut comprendre au moins trois couches fonctionnelles et au moins quatre revêtements diélectriques comportant au moins une couche diélectrique, de manière à ce que chaque couche fonctionnelle soit disposée entre deux revêtements diélectriques.

L'empilement est situé sur au moins une des faces du substrat transparent.

Par « revêtement diélectrique » au sens de la présente invention, il faut comprendre qu'il peut y avoir une seule couche ou plusieurs couches de matériaux différents à l'intérieur du revêtement. Un « revêtement diélectrique » selon l'invention comprend majoritairement des couches diélectriques. Cependant, selon l'invention ces revêtements peuvent comprendre également des couches d'autre nature notamment des couches absorbantes ou des couches métalliques autre que des couches fonctionnelles à base d'argent. Par exemple, le revêtement le plus éloigné du substrat peut comprendre une couche de protection déposée sous forme métallique.

On considère qu'un « même » revêtement diélectrique se situe :

- entre le substrat et la première couche fonctionnelle,
- entre chaque couche métallique fonctionnelle à base d'argent,
- au-dessus de la dernière couche fonctionnelle (la plus éloignée du substrat).

Par « couche diélectrique » au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5. n désigne l'indice de réfraction réel du matériau à une longueur d'onde donnée et k représente la partie imaginaire de l'indice de réfraction à une longueur d'onde donnée ; le rapport n/k étant calculé à une longueur d'onde donnée identique pour n et pour k.

L'épaisseur d'un revêtement diélectrique correspond à la somme des épaisseurs des couches le constituant.

Selon l'invention, les couches à base d'oxyde de titane font parties d'un revêtement diélectrique. Cela signifie que lorsque l'on détermine l'épaisseur d'un revêtement diélectrique, on prend en considération l'épaisseur de ces couches.

De préférence, les revêtements diélectriques présentent une épaisseur supérieure à 10 nm, supérieure à 15 nm, comprise entre 15 et 200 nm, comprise entre 15 et 100 nm ou comprise entre 15 et 70 nm.

Les couches diélectriques des revêtements présentent les caractéristiques suivantes seules ou en combinaison :

- elles sont déposées par pulvérisation cathodique assistée par champ magnétique,
- elles sont choisies parmi les oxydes ou nitrures d'un ou plusieurs éléments choisi(s) parmi le titane, le silicium, l'aluminium, le zirconium, l'étain et le zinc,
- elles ont une épaisseur supérieure à 2 nm, de préférence comprise entre 2 et 100 nm, entre 5 et 50 nm ou entre 5 et 30 nm.

Certaines couches diélectriques présentent une fonction barrière. On entend par couches diélectriques à fonction barrière (ci-après couche barrière), une couche en un matériau apte à faire barrière à la diffusion de l'oxygène et de l'eau à haute température, provenant de l'atmosphère ambiante ou du substrat transparent, vers la couche fonctionnelle.

De telles couches diélectriques sont choisies parmi :

- les couches comprenant du silicium et/ou de l'aluminium et/ou du zirconium et sont choisis par exemple parmi les oxydes tels que $SiO_2$, les nitrures tels que les nitrure de silicium $Si_3N_4$ et les nitrures d'aluminium AlN, et les oxynitrures $SiO_xN_y$, éventuellement dopé à l'aide d'au moins un autre élément,
- les couches à base d'oxyde de zinc et d'étain,
- les couches à base d'oxyde de titane.

Le matériau peut comprendre une couche à base d'oxyde de zinc et d'étain comprenant au moins 20 % en masse d'étain par rapport à la masse totale de zinc et d'étain, située au-dessus et au contact de la couche à base d'oxyde de titane.

La couche à base d'oxyde de zinc et d'étain comprend en masse d'étain par rapport à la masse totale de zinc et d'étain :

- au moins 30 %, au moins 40 %, au moins 45 %, au moins 50 % ou au moins 55 %,
- au plus 70 %, au plus 65 % ou au plus 60 % en masse de zinc.

La couche à base d'oxyde de zinc et d'étain présente une épaisseur :

- supérieure à 5 nm, supérieure à 10 nm, supérieure à 15 nm, supérieure à 18 nm,
- inférieure à 40 nm, inférieure à 30 nm, inférieure à 25 nm.

L'empilement comprends au moins une couche comprenant du silicium. Chaque revêtement diélectrique peut comprendre au moins une couche comprenant du silicium.

Les couches comprenant du silicium sont extrêmement stables aux traitements thermiques. Par exemple, on n'observe pas de migrations des éléments les constituant. Par conséquent, ces éléments ne sont pas susceptibles d'altérer la couche d'argent. Les couches comprenant du silicium contribuent donc également à la non altération des couches d'argent et donc à l'obtention d'une faible émissivité après traitement thermique.

Les couches comprenant du silicium peuvent être choisies parmi les couches à base d'oxyde, à base de nitrure ou à base d'oxynitrure de silicium telles que les couche à base d'oxyde de silicium, les couches à base de nitrure de silicium et les couches à base d'oxynitrure de silicium.

Lorsque chaque revêtement comprend une couche comprenant du silicium, ces couches ne sont pas nécessairement de même nature.

Les couches comprenant du silicium peuvent comprendre ou être constituées d'éléments autres que le silicium, l'oxygène et l'azote. Ces éléments peuvent être choisis parmi l'aluminium, le bore, le titane, et le zirconium.

Les couches comprenant du silicium peuvent comprendre au moins 50 %, au moins 60 %, au moins 65 %, au moins 70 % au moins 75,0 %, au moins 80 % ou au moins 90 % en masse de silicium par rapport à la masse de tous les éléments constituant la couche comprenant du silicium autres que de l'azote et de l'oxygène.

De préférence, la couche comprenant du silicium comprend au plus 35 %, au plus 20 % ou au plus 10 % en masse d'éléments autres que du silicium par rapport à la masse de tous les éléments constituant la couche comprenant du silicium autres que de l'oxygène et l'azote.

Selon un mode de réalisation, les couches comprenant du silicium comprennent moins de 35%, moins de 30 %, moins de 20 %, moins de 10 %, moins de 5 % ou moins de 1 % en masse de zirconium par rapport à la masse de tous les éléments constituant la couche à base d'oxyde de silicium autres que de l'oxygène et l'azote.

La couche comprenant du silicium peut comprendre au moins 2 %, au moins 5,0 % ou au moins 8 % en masse d'aluminium par rapport à la masse de tous les éléments constituant la couche à base d'oxyde de silicium autres que de l'oxygène et l'azote.

Les quantités d'oxygène et d'azote dans une couche sont déterminées en pourcentages atomiques par rapport aux quantités totales d'oxygène et d'azote dans la couche considérée.

Selon l'invention :

- les couches à base d'oxyde de silicium comprennent essentiellement de l'oxygène et très peu d'azote,
- les couches à base de nitrure de silicium comprennent essentiellement de l'azote et très peu d'oxygène,
- les couches à base d'oxynitrure de silicium comprennent un mélange d'oxygène et d'azote.

Les couches à base d'oxyde de silicium comprennent au moins 90 % en pourcentage atomique d'oxygène par rapport à l'oxygène et l'azote dans la couche à base d'oxyde de silicium.

Les couches à base nitrure de silicium comprennent au moins 90 % en pourcentage atomique d'azote par rapport à l'oxygène et l'azote dans la couche à base d'oxyde de silicium.

Les couches à base d'oxynitrure de silicium comprennent 10 à 90 % (bornes exclues) en pourcentage atomique d'azote par rapport à l'oxygène et l'azote dans la couche à base d'oxyde de silicium.

De préférence, les couches à base d'oxyde de silicium se caractérise par un indice de réfraction à 550 nm, inférieur ou égale à 1,55.

De préférence, les couches à base de nitrure de silicium se caractérise par un indice de réfraction à 550 nm, supérieur ou égale à 1,95.

De préférence, les couches à base d'oxynitrure de silicium se caractérisent par un indice de réfraction à 550 nm intermédiaire entre une couche d'oxyde non nitrurée et une couche de nitrure non oxydée. Les couche à base d'oxynitrure de silicium ont de préférence un indice de réfraction à 550 nm supérieure à 1,55, 1,60 ou 1,70 ou compris entre 1,55 et 1,95, 1,60 et 2,00, 1,70 et 2,00 ou 1,70 et 1,90.

Ces indices de réfraction peuvent varier dans une certaine mesure selon les conditions de dépôts. En effet, en jouant sur certains paramètres tels que la pression ou présence de dopants, on peut obtenir des couches plus ou moins denses et donc une variation d'indice de réfraction.

Les couches comprenant du silicium peuvent être des couches de nitrure de silicium et d'aluminium et éventuellement de zirconium. Ces couches de nitrure de silicium et d'aluminium et/ou de zirconium peuvent également comporter, en poids par rapport au poids de silicium, aluminium et zirconium :

- 50 à 98 %, 60 à 90 %, 60 à 70 % en poids de silicium,
- 2 à 10 % en poids d'aluminium,
- 0 à 30 %, 10 à 30 % ou 15 à 27 % en poids de zirconium.

La somme des épaisseurs de toutes les couches comprenant du silicium dans chaque revêtement diélectrique est supérieure ou égale à 5 nm, supérieure ou égale à 10 nm, voire supérieure ou égale à 15 nm.

Ces couches comprenant du silicium ont, par ordre de préférence croissant, une épaisseur :

- inférieure ou égale à 40 nm et/ou
- supérieure ou égale à 5 nm, supérieure ou égale à 10 nm ou supérieure ou égale à 15 nm.

De préférence, au moins un revêtement diélectrique comprend une couche comprenant du silicium choisie parmi les couches à base de nitrure de silicium et/ou d'aluminium.

De préférence, chaque revêtement diélectrique comprend une couche comprenant du silicium choisie parmi les couches à base de nitrure de silicium et/ou d'aluminium.

Les revêtements diélectriques peuvent comporter d'autres couches que ces couches comprenant du silicium.

De préférence, la somme des épaisseurs de toutes les couches comprenant du silicium dans le revêtement diélectrique situé entre le substrat et la première couche d'argent est supérieure à 35 %, supérieure à 50 %, supérieure à 60 % supérieure à 70 %, supérieure à 75 % de l'épaisseur totale du revêtement diélectrique.

De préférence, la somme des épaisseurs de toutes les couches comprenant du silicium à base de nitrure de silicium dans le revêtement diélectrique situé entre le substrat et la première couche d'argent est supérieure à 35 %, supérieure à 50 %, supérieure à 60 % supérieure à 70 %, supérieure à 75 % de l'épaisseur totale du revêtement diélectrique.

De préférence, la somme des épaisseurs de toutes les couches comprenant du silicium dans chaque revêtement diélectrique situé au-dessus de la première couche métallique fonctionnelle à base d'argent peut être supérieure à 35 %, supérieure à 50 %, supérieure à 60 % supérieure à 70 %, supérieure à 75 % de l'épaisseur totale du revêtement diélectrique.

De préférence, la somme des épaisseurs de toutes les couches comprenant du silicium à base de nitrure de silicium dans chaque revêtement diélectrique situé au-dessus de la première couche métallique fonctionnelle à base d'argent peut être supérieure à 35 %, supérieure à 50 %, supérieure à 60 % supérieure à 70 %, supérieure à 75 % de l'épaisseur totale du revêtement diélectrique.

De préférence, la somme des épaisseurs de toutes les couches comprenant du silicium dans chaque revêtement diélectrique peut être supérieure à 35 %, supérieure à 50 %, supérieure à 60 % supérieure à 70 %, supérieure à 75 % de l'épaisseur totale du revêtement diélectrique.

De préférence, l'empilement ne comprend pas de couche de blocage métallique ou à base d'oxyde de titane en-dessous et au contact de la couche métallique fonctionnelle à base d'argent. Dans ce cas, la couche métallique fonctionnelle à base d'argent est située au-dessus et au contact d'une couche diélectrique du revêtement diélectrique. De préférence, cette couche diélectrique est une couche stabilisante ou de mouillage en un matériau apte à stabiliser l'interface avec la couche fonctionnelle. Ces couches sont en général à base d'oxyde de zinc.

La couche fonctionnelle métallique peut donc être déposée au-dessus et au contact d'une couche à base d'oxyde de zinc.

Les couches à base d'oxyde de zinc, peuvent comprendre, au moins 50 %, au moins 60 %, au moins 70 %, au moins 80 %, au moins 90 %, au moins 95 %, au moins 96 %, au moins 97 %, au moins 98 %, au moins 99 % ou 100 % en masse de zinc par rapport à la masse totale de tous les éléments constituant la couche à base d'oxyde de zinc à l'exclusion de l'oxygène et de l'azote.

Pour être correctement cristallisées par dépôt par pulvérisation cathodique, les couches à base d'oxyde de zinc comprennent avantageusement au moins 80 %, voire au moins 90 % en masse de zinc par rapport à la masse totale de tous les éléments constituant la couche à base d'oxyde de zinc à l'exclusion de l'oxygène et de l'azote.

Les couches à base d'oxyde de zinc peuvent comprendre un ou plusieurs éléments choisis parmi l'aluminium, le titane, le niobium, le zirconium, le magnésium, le cuivre, l'argent, l'or, le silicium, le molybdène, le nickel, le chrome, le platine, l'indium, l'étain et l'hafnium, de préférence l'aluminium.

Les couches à base d'oxyde de zinc peuvent être éventuellement dopée à l'aide d'au moins un autre élément, comme l'aluminium.

A priori, la couche à base d'oxyde de zinc n'est pas nitrurée, cependant des traces peuvent exister.

La couche à base d'oxyde de zinc comprend, par ordre de préférence croissant, au moins 80 %, au moins 90 %, au moins 95 %, au moins 98 %, au moins 100 %, en masse d'oxygène par rapport à la masse totale de l'oxygène et de l'azote.

De préférence, le revêtement diélectrique situé directement en-dessous de la couche métallique fonctionnelle à base d'argent comporte au moins une couche diélectrique cristallisée, notamment à base d'oxyde de zinc, éventuellement dopé à l'aide d'au moins un autre élément, comme l'aluminium. La couche fonctionnelle métallique est déposée au-dessus et au contact d'une couche à base d'oxyde de zinc.

La couche à base d'oxyde de zinc est déposée à partir d'une cible céramique, avec ou sans oxygène ou à partir d'une cible métallique.

Les revêtements diélectriques situé entre le substrat et la première couche d'argent peut être uniquement constitué de couches comprenant du silicium et de couches à base d'oxyde de zinc.

Les revêtements diélectriques peuvent être uniquement constitués de couches comprenant du silicium et de couches à base d'oxyde de zinc.

Les revêtements diélectriques peuvent être uniquement constitués de couche comprenant du silicium à base de nitrure de silicium, de couche à base d'oxyde de zinc et éventuellement d'une couche de protection.

Dans tous les empilements, le revêtement diélectrique le plus proche du substrat est appelé revêtement inférieur et le revêtement diélectrique le plus éloigné du substrat est appelé revêtement supérieur. Les empilements à plus d'une couche d'argent comprennent également des revêtements diélectriques intermédiaires situés entre le revêtement inférieur et supérieur.

De préférence, les revêtements inférieurs ou intermédiaires comprennent une couche diélectrique cristallisée à base d'oxyde de zinc située directement au contact de la couche métallique à base d'argent.

Les couches d'oxyde de zinc ont une épaisseur :

- d'au moins 1,0 nm, d'au moins 2,0 nm, d'au moins 3,0 nm, d'au moins 4,0 nm, d'au moins 5,0 nm, d'au moins 6,0 nm et/ou
- d'au plus 25 nm, d'au plus 10 nm, d'au plus 8,0 nm.

La somme des épaisseurs de toutes les couches à base d'oxyde présentes dans le revêtement diélectrique situé en dessous de la première couche métallique fonctionnelle peut être inférieure à 70 %, inférieure à 60 %, inférieure à 50 %, inférieure à 40 % inférieure à 30 %, inférieure à 25 % de l'épaisseur totale du revêtement diélectrique.

La somme des épaisseurs de toutes les couches à base d'oxyde présentes dans chaque revêtement diélectrique situé au-dessus de la première couche métallique fonctionnelle peut être inférieure à 70 %, inférieure à 60 %, inférieure à 50 %, inférieure à 40 % inférieure à 30 %, inférieure à 25 % de l'épaisseur totale du revêtement diélectrique.

L'empilement de couches minces peut éventuellement comprendre une couche de protection. La couche de protection est de préférence la dernière couche de l'empilement, c'est-à-dire la couche la plus éloignée du substrat revêtu de l'empilement (avant traitement thermique). Ces couches ont en général une épaisseur comprise entre 0,5 et 10 nm, entre 1 et 5 nm, entre 1 et 3 nm ou entre 1 et 2,5 nm. Cette couche de protection peut être choisie parmi une couche de titane, de zirconium, d'hafnium, de silicium, de zinc et/ou d'étain, ce ou ces métaux étant sous forme métallique, oxydée ou nitrurée.

Selon un mode de réalisation, la couche de protection est à base d'oxyde de zirconium et/ou de titane, de préférence à base d'oxyde de zirconium, d'oxyde de titane ou d'oxyde de titane et de zirconium.

Lorsque l'on détermine l'épaisseur d'un revêtement diélectrique, on prend en compte l'épaisseur de la couche de protection.

Le matériau de l'invention peut comprendre :

- une couche comprenant du silicium, de préférence à base de nitrure de silicium,
- une couche à base d'oxyde de zinc,
- une couche à base d'argent,
- une couche à base d'oxyde de titane,
- une couche comprenant du silicium, de préférence à base de nitrure de silicium,
- éventuellement une couche de protection.

Le matériau de l'invention peut comprendre :

- une couche comprenant du silicium, de préférence à base de nitrure de silicium,
- une couche à base d'oxyde de zinc,
- une couche à base d'argent,
- un revêtement à base d'oxyde de titane,
- une couche à base d'oxyde de zinc et d'étain,
- une couche comprenant du silicium, de préférence à base de nitrure de silicium,
- éventuellement une couche de protection.

Les substrats transparents selon l'invention sont de préférence en un matériau rigide minéral, comme en verre, ou organiques à base de polymères (ou en polymère).

Les substrats transparents organiques selon l'invention peuvent également être en polymère, rigides ou flexibles. Des exemples de polymères convenant selon l'invention comprennent, notamment :

- le polyéthylène,
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluorés (FEP) ;
- les résines photoréticulables et/ou photopolymérisables, telles que les résines thiolène, polyuréthane, uréthane-acrylate, polyester-acrylate et
- les polythiouréthanes.

Le substrat est de préférence une feuille de verre ou de vitrocéramique.

Le substrat est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate.

Selon un mode de réalisation préféré, le substrat est en verre, notamment silico-sodo-calcique ou en matière organique polymérique.

Le substrat possède avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 2 et 8 mm, voire entre 4 et 6 mm. Le substrat peut être plan ou bombé, voire flexible.

L'invention concerne également un vitrage comprenant au moins un matériau selon l'invention. L'invention concerne un vitrage pouvant être sous forme de vitrage monolithique, feuilleté et/ou multiple, en particulier double vitrage ou triple vitrage.

Un vitrage monolithique comporte 2 faces, la face 1 est à l'extérieur du bâtiment et constitue donc la paroi extérieure du vitrage, la face 2 est à l'intérieur du bâtiment et constitue donc la paroi intérieure du vitrage.

Un vitrage multiple comprend au moins un matériau selon l'invention et au moins un substrat additionnel, le matériau et le substrat additionnel sont séparés par au moins une lame de gaz intercalaire. Le vitrage réalise une séparation entre un espace extérieur et un espace intérieur.

Un double vitrage comporte 4 faces, la face 1 est à l'extérieur du bâtiment et constitue donc la paroi extérieure du vitrage, la face 4 est à l'intérieur du bâtiment et constitue donc la paroi intérieure du vitrage, les faces 2 et 3 étant à l'intérieur du double vitrage.

Un vitrage feuilleté comporte au moins une structure de type premier substrat / feuille(s) / deuxième substrat. La feuille polymérique peut notamment être à base de polyvinylbutyral PVB, éthylène vinylacétate EVA, polyéthylène téréphtalate PET, polychlorure de vinyle PVC. L'empilement de couches minces est positionné sur l'une au moins des faces d'un des substrats.

Ces vitrages peuvent être montés sur un bâtiment ou un véhicule.

Les exemples suivants illustrent l'invention.

**Exemples**

**I. Préparation des substrats : Empilements, conditions de dépôt**

Des empilements de couches minces définis ci-après sont déposés sur des substrats en verre sodo-calcique clair d'une épaisseur de 2 ou 4 mm. Dans les exemples de l'invention :

- les couches fonctionnelles sont des couches d'argent (Ag),
- les couches diélectriques sont à base de nitrure de silicium, dopé à l'aluminium ($Si_3N_4$ : Al), d'oxyde de zinc et d'étain et d'oxyde de zinc (ZnO).

Les couches d'oxyde de titane TiOx sont déposées à partir d'une cible céramique de TiOx avec ou sans oxygène dans l'atmosphère de dépôt.

Les conditions de dépôt des couches, qui ont été déposées par pulvérisation (pulvérisation dite « cathodique magnétron »), sont résumées dans le tableau 1.

[Table 1]

| Matériaux | Composition | cible | Pression | Puissance | Gaz sccm | | | |
|---|---|---|---|---|---|---|---|---|
| | | | | | Ar | O₂ | N₂ | Ar/O₂ (90/10) |
| ZnO | ZnO:Al 2%wt | céramique | 2 µbar | 1300 W | 40 | 2 | - | - |
| ZnO* | ZnO:Al 2%wt | céramique | 2 µbar | 1300 W | 40 | 2 | - | - |
| TiOx_0 % | TiOx | céramique | 2 µbar | 2000 W | 30 | 0 | - | - |
| TiOx_1,7 % | TiOx | céramique | 2 µbar | 2000 W | 20 | 0 | - | 4 |

(suite)

| Matériaux | Composition | cible | Pression | Puissance | Gaz sccm | | | |
|---|---|---|---|---|---|---|---|---|
| | | | | | Ar | $O_2$ | $N_2$ | Ar/$O_2$ (90/10) |
| TiOx_3,3% | TiOx | céramique | 2 μbar | 2000 W | 20 | 0 | - | 10 |
| TiOx_5 % | TiOx | céramique | 2 μbar | 2000 W | 20 | 0 | - | 20 |
| SnZnO | Sn:Zn 60/40% | métallique | 2 μbar | 1500 W | 15 | 38 | | |
| SnZnO* | Sn:Zn 60/40% | métallique | 2 μbar | 500 W | 10 | 19 | | |
| Ag | Ag | métallique | 8 μbar | 210 W | 80 | - | - | - |
| Ag* | Ag | métallique | 8 μbar | 210 W | 20 | - | - | - |
| Si3N4 | Si:Al 8%wt | métallique | 2 μbar | 2000 W | 18 | - | 24 | - |
| SiZrN | Si:Zr 27%wt | métallique | 2 μbar | 1000 W | 15 | - | 15 | - |
| %wt : % en poids | | | | | | | | |

Les tableaux ci-dessous liste les matériaux et les épaisseurs physiques en nanomètres (sauf autres indications) de chaque couche ou revêtement qui constitue les empilements en fonction de leurs positions vis-à-vis du substrat porteur de l'empilement.

**I.1. Couche épaisse de** TiOx (ces exemples ne sont pas selon la revendication indépendante 1)

[Tableau 2]

| Matériaux | Couches | Réf.1 | Emp.1 |
|---|---|---|---|
| Rev. diélectrique | TiOx | 2 | 2 |
| | $Si_3N_4$ | 30 | 30 |
| | ZnO* | 5 | - |
| | TiOx : 0% O2 | - | 5 |
| Couche fonctionnelle | Aq | 12 | 12 |
| Rev. diélectrique | ZnO | 5 | 5 |
| | $Si_3N_4$ | 20 | 20 |
| Substrat (mm) | verre | | |

[Tableau 3]

| Matériaux | Couches | Réf.2 | Emp.2-1 | Emp.2-2 | Emp.2-3 | Emp.2-4 |
|---|---|---|---|---|---|---|
| Rev. diélectrique | TiOx | 2 | 2 | 2 | 2 | 2 |
| | $Si_3N_4$ | 30 | 30 | 30 | 30 | 30 |
| | ZnO* | 5 | - | - | - | - |
| | TiOx : 0% O2 | - | 5 | - | - | - |
| | TiOx : 2% O2 | - | - | 5 | - | - |
| | TiOx : 5% O2 | - | - | - | 5 | - |
| | TiOx : 9% O2 | - | - | - | - | 5 |
| Couche fonctionnelle | Ag | 12 | 12 | 12 | 12 | 12 |
| Rev. diélectrique | ZnO* | 5 | 5 | 5 | 5 | 5 |
| | $Si_3N_4$ | 20 | 20 | 20 | 20 | 20 |

(suite)

| Matériaux | Couches | Réf.2 | Emp.2-1 | Emp.2-2 | Emp.2-3 | Emp.2-4 |
|---|---|---|---|---|---|---|
| Substrat (mm) | verre | | | | | |

| Matériaux | Couches | Comp.2-1 | Emp.2-5 | Comp.2-2 | Emp.2-6 |
|---|---|---|---|---|---|
| Rev. diélectrique | TiOx | 2 | 2 | 2 | 2 |
| | $Si_3N_4$ | 30 | 30 | 30 | 30 |
| | ZnO* | - | - | - | - |
| | TiOx : 0% O2 | 1 | 3 | - | - |
| | TiOx : 2% O2 | - | - | 1 | 3 |
| | TiOx : 5% O2 | - | - | - | - |
| | TiOx : 9% O2 | - | - | - | - |
| Couche fonctionnelle | Ag | 12 | 12 | 12 | 12 |
| Rev. diélectrique | ZnO* | 5 | 5 | 5 | 5 |
| | $Si_3N_4$ | 20 | 20 | 20 | 20 |
| Substrat (mm) | verre | | | | |

Les références 1 et 2 et les empilements 1 et 2 selon l'invention diffèrent par la nature de la couche déposée au-dessus et en contact de l'argent respectivement ZnO (5nm) ou TiOx (5nm).

Pour les empilements 1 et 2-1, la couche de TiOx est déposée à partir d'une cible céramique de TiOx sans oxygène dans l'atmosphère de dépôt.

Pour les empilements 2-2, 2-3 et 2-4, la couche de TiOx est déposée à partir d'une cible céramique de TiOx avec oxygène dans l'atmosphère de dépôt.

La couche de ZnO en sous-couche (*i.e.*, sous Ag) de la référence 1 et de l'empilement 1 est déposée à partir d'une cible métallique de ZnO.

La couche de ZnO en sous-couche (*i.e.*, sous Ag) de la référence 2 et des empilements 2-1, 2-2, 2-3 et 2-4 est déposée à partir d'une cible céramique de ZnO avec 5% $O_2$.

Dans ces exemples, les traitements thermiques sont réalisés au four NABER à une température de 650°C pendant 10 minutes.

**1.2. Couche épaisse de TiOx & SnZnO** (les exemples Réf.10, Emp.11, Emp.12, Emp.12-0 et Emp.13 ne sont pas selon la revendication indépendante 1)

[Table 4]

| Couches | Réf.10 | Emp.11 | Emp.12 | Emp.11-1 |
|---|---|---|---|---|
| TiOx | 2 | 2 | 2 | 2 |
| $Si_3N_4$ | 30 | 30 | 30 | 10 |
| SnZnOx* | | - | 20 | |
| ZnO | 5 | - | - | - |
| TiOx : 5% O2 | - | - | 3 | - |
| TiOx : 1,7 % O2 | - | 5 | - | 5 |
| TiOx : 0% O2 | - | - | 2 | - |
| Aq | 12 | 12 | 12 | 12 |
| ZnO | 5 | 5 | 5 | 5 |
| $Si_3N_4$ | 20 | 20 | 20 | 20 |
| Verre (4 mm) | | | | |

[Table 5]

| Couches | Emp.12-0 | Emp.12-1 | Emp.12-2 | Emp.12-3 |
|---|---|---|---|---|
| TiOx | 2 | 2 | 2 | 2 |
| $Si_3N_4$ | 10 | 10 | 10 | 10 |
| SnZnOx* | 20 | 20 | 20 | 20 |
| TiOx : 3,5% O2 | 0 | 5 | 10 | 15 |
| TiOx : 0% O2 | 5 | 5 | 5 | 5 |
| Ag* | 11 | 11 | 11 | 11 |
| ZnO | 5 | 5 | 5 | 5 |
| $Si_3N_4$* | 20 | 20 | 20 | 20 |
| Verre (4 mm) | | | | |

[Table 6]

| Couches | Emp.13 | Emp.13-1 |
|---|---|---|
| TiOx | 2 | 2 |
| $Si_3N_4$ | 30 | 10 |
| SnZnOx | - | 20 |
| ZnO | - | - |
| TiOx : 5 % O2 | 10 | 10 |
| TiOx : 1,7 % O2 | 5 | 5 |
| Aq | 12 | 12 |
| ZnO | 5 | 5 |
| $Si_3N_4$ | 20 | 20 |
| Verre (4 mm) | | |

Les empilements de l'invention comprennent une couche de SnZnO (20nm) au-dessus et en contact avec une couche ou un revêtement à base d'oxyde de titane.

Les empilements 12-1, 12-2 et 12-3 comprennent des revêtements à base d'oxyde de titane (revêtement à gradient d'oxygène) comprenant au moins deux couches d'oxyde de titane comprenant des proportions d'oxygène différentes. La première couche est déposée en contact de la couche d'argent et dans une atmosphère sans oxygène avec une épaisseur de 5 nanomètres. Cette couche est donc sous oxydée. La deuxième couche à base d'oxyde de titane est déposée dans une atmosphère avec 3,3% d'oxygène en débit volumique et présente une épaisseur variant de 0 à 15 nanomètres. Cette couche est donc plus oxydée que la première.

L'empilement 13-1 comprend un revêtement à gradient d'oxygène comprenant au moins deux couches d'oxyde de titane comprenant des proportions d'oxygène différentes. Les deux couches sont déposées à partir d'une cible céramique avec oxygène. La deuxième couche est plus oxydée que la première.

**II. Evolution de la résistance carré et de l'absorption**

Dans ces exemples, les traitements thermiques sont réalisés au four NABER à une température de 650°C pendant 10 minutes.

**11.1. Généralité**

La résistance carré Rsq, correspondant à la résistance rapportée à la surface, est mesurée par induction avec un Nagy SMR-12.

La résistance carrée et l'absorption ont été mesurées avant traitement thermique (BT) et après des traitements thermiques à une température de 650°C pendant 10 min (AT).

La variation de résistivité a été déterminée de la façon suivante :

$$\Delta Rsq(n-p)= (Rsq\_Refn-Rsq\_Emp(n-p)) / Rsq\_Refn \times 100.$$

Le gain est positif lorsque la résistance par carré est améliorée et négatif lorsque la résistance par carré est détériorée suite au traitement thermique.

Le tableau ci-dessous présente les mesures de Rsq et d'absorption.

**II.1.1. Couche épaisse de TiOx [Tableau 7]**

| Tableau | TT | Ref.1 | Emp.1 | Ref.2 | Emp. 2-1 | Emp. 2-2 | Comp. 2-1 | Emp. 2 -5 | Comp. 2-2 | Emp. 2-6 |
|---|---|---|---|---|---|---|---|---|---|---|
| **Rsq (Ω/□)** | BT % | 4,55 | 4,16 | 4,49 | 4,05 | 5,01 | 4,95 | 4,26 | 5,32 | 4,92 |
| | BT ΔRsq | - | **8,6** | - | **+10** | **- 11,3** | **-10,2** | **+5** | **-18** | **-9** |
| | AT % | 3,52 | 3,07 | 3,42 | 3,14 | 3,02 | 3,62 | 3,29 | 3,55 | 3,20 |
| | AT ΔRsq | - | **12,8** | - | **+8,2** | **+11,4** | **-5** | **+4** | **-3** | **+6** |
| **Abs.** | BT % | 8,6 | 13,0 | 8,5 | 12,2 | 10,7 | 13,2 | 10,6 | 12,1 | 10,2 |
| | AT % | 6,5 | 10,5 | 6,5 | 10,6 | 6,1 | 9,1 | 8,2 | 8,4 | 6,2 |
| BT : Avant traitement thermique, AT : Après traitement thermique | | | | | | | | | | |

Couche épaisse d'oxyde de titane déposée sans oxygène

Avant et après traitement thermique, la résistance carré des empilements Emp.1, Emp.2-1 et Emp.2-5 est plus basse que la résistivité des empilements Ref.1 et Ref.2.

Une couche épaisse d'oxyde de titane déposée sans oxygène permet donc d'obtenir un gain en Rsq avant et après traitement thermique.

En revanche, l'absorption de l'empilement Emp.1 et 2-1 est dégradée (i.e., augmentée), et ce, avant ou après traitement thermique.

Cette augmentation est attendue en raison de l'absence d'oxygène pendant le dépôt de la couche d'oxyde de titane. Le TiOx est sous-stoechiométrique. Il est donc absorbant.

L'exemple comp.2-1 ne comprend pas une couche épaisse de TiOx. Dans ce cas, l'absorption et la Rsq sont dégradées avant traitement thermique. Il ne permet pas d'obtenir un gain en résistivité après traitement thermique.

Couche épaisse d'oxyde de titane déposée avec oxygène

Pour les empilements 2-2 et 2-6 selon l'invention, la résistivité avant traitement thermique est plus élevée. Cela pourrait être attribuable à une dégradation de la couche d'argent pendant le dépôt de la couche d'oxyde de titane en atmosphère oxydante.

Après traitement thermique, la résistivité est plus faible dans le cas de l'empilement 2-2 et 2-6 que celle de l'empilement de référence 2 correspondant. Après traitement thermique, un gain en résistivité et les meilleures valeurs de résistance carré sont obtenus (3,03 Ω/□) pour l'empilement 2-2.

La dégradation de la résistivité induite par l'introduction d'oxygène pendant le dépôt de TiOx et observée avant traitement thermique est supprimée après traitement thermique.

L'absorption des empilement 2-2 et 2-6 est dégradée (i.e., augmentée) avant traitement thermique.

En revanche, après traitement thermique l'absorption des empilements 2-2 et 2-6 est plus faible que l'absorption du matériau de référence. L'absorption des empilements 2-2 et 2-6 comprenant une couche de blocage déposée dans une atmosphère contrôlée comprenant de l'oxygène n'est pas dégradée après traitement thermique.

Une couche épaisse d'oxyde de titane déposée avec oxygène permet donc d'obtenir un gain en Rsq, les meilleures valeurs de Rsq après traitement thermique sans dégradation de l'absorption.

L'exemple comp.2-2 ne comprend pas une couche épaisse de TiOx. Dans ce cas, l'absorption et la Rsq sont dégradées avant traitement thermique. Il ne permet pas d'obtenir un gain en résistivité après traitement thermique.

## II.1.2. Couche épaisse de TiOx & SnZnO [Table 8]

| Tableau | TT | Ref.10 | Emp.11 | Emp.12 | Emp. 11-1 |
|---|---|---|---|---|---|
| **Rsq ($\Omega/\square$)** | BT | 4,50 | 5,01 | 4,26 | 5,61 |
| | BT $\Delta$Rsq (%) | - | -11 | 5,3 | -24 |
| | AT | 3,42 | 3,03 | 3,06 | 3,07 |
| | AT $\Delta$Rsq (%) | - | 12,3 | 10,5 | 10,2 |
| **Absorption %** | BT | 8,5 | 10,7 | 8,8 | 9,2 |
| | AT | 6,5 | 6,2 | 6,6 | 5,6 |
| BT : Avant traitement thermique, AT après traitement thermique. | | | | | |

Avant traitement thermique, la résistance carré des empilements comprenant une couche à base d'oxyde de titane TiOx_1,7 % (sans et avec SnZnO) est dégradée comparée à celle de l'empilement de référence (5,01-5,61 $\Omega/\square$ vs. 4,50 $\Omega/\square$). La présence d'oxygène pendant le dépôt de la couche de TiOx semble contribuer à dégrader la couche d'argent.

Après traitement thermique, la résistance carré de l'empilement de l'invention est meilleure de celle de l'empilement de référence Ref.0 (3,07 $\Omega/\square$ vs. 3,42 $\Omega/\square$).

En revanche, l'insertion de la couche de SnZnO permet de faire baisser l'absorption et ce, avant et après traitement thermique (comparaison Emp.11 et Emp.11-1). Avant traitement thermique, l'absorption passe de 10,7% à 9,2% avec l'ajout de SnZnO, mais reste plus élevée que celle de l'empilement référence (9,2% vs. 8,5%). Après traitement thermique, l'absorption de l'empilement de l'invention (5,6%) est plus basse que celle de l'empilement Emp.11 (6,2%) et aussi plus basse que la référence Ref.10 avec Ag/ZnO (6,5%). La présence d'une couche de SnZnO au contact de la couche à base d'oxyde de titane, permet de diminuer l'absorption de la couche de TiOx_1,7 % et ainsi de l'empilement complet.

## II.2. Impact du pourcentage d'oxygène dans l'atmosphère de dépôt de la couche de TiOx

Le tableau ci-dessous montre l'influence des quantité d'oxygène dans l'atmosphère de dépôt sur la résistance carrée et l'absorption.

[Tableau 9]

| Tableau | %$O_2$ : **TiO_X** | Rsq $\Omega/\square$ | | Absorption | |
|---|---|---|---|---|---|
| | | AT | BT | AT | BT |
| Ref.2 | - | 4,49 $\Omega/\square$ | 3,42 $\Omega/\square$ | **8,6 %** | **6,5 %** |
| Emp.2-1 | 0 | **4,05 $\Omega/\square$** | 3,14 $\Omega/\square$ | 12,2 % | 10,6 % |
| Emp.2-2 | 1,7 | 5,01 $\Omega/\square$ | **3,02 $\Omega/\square$** | 10,7 % | **6,1 %** |
| Emp.2-3 | 3,5 | 12,60 $\Omega/\square$ | 4,07 $\Omega/\square$ | 18,5 % | 9,2 % |
| Emp.2-4 | 5 | 33,50 $\Omega/\square$ | 7,52 $\Omega/\square$ | 27,8 % | 14,2 % |

Avant traitement thermique

Les meilleures valeurs de résistivité sont obtenues pour l'empilement comprenant une couche épaisse d'oxyde de titane déposée sans oxygène (Emp.2-1).

Plus les quantités d'oxygène dans l'atmosphère de dépôt sont élevées, plus la résistivité est dégradée.

L'absorption des empilements Emp.2-1, 2-2, 2-3 et 2-4 augmente avant traitement thermique. L'absorption est donc dégradée (comparaison avec Ref.2). En revanche, on observe un effet surprenant. Les meilleures valeurs d'absorption sont obtenues pour l'empilement comprenant une couche épaisse d'oxyde de titane déposée avec 1,7 % d'oxygène (Emp.2-1) par rapport aux empilements comprenant une couche d'oxyde de titane :

- sans oxygène (Emp. 2-1, 12 %),
- avec 3,5 % et plus d'oxygène dans l'atmosphère de dépôt (Emp. 2-3, 18 %).

Cela signifie que sans oxygène ou avec trop d'oxygène lors du dépôt de la couche d'oxyde de titane, l'absorption est plus dégradée. Or, il existe une quantité optimale pour laquelle, l'absorption est moins dégradée.

Après traitement thermique

On observe là encore des effets surprenants.

Les meilleures valeurs de résistivité sont obtenues pour l'empilement comprenant une couche épaisse d'oxyde de titane déposée avec 1,7 % d'oxygène (Emp.2-1).

Après traitement thermique, l'absorption de l'empilement 2-2 devient similaire à celle de l'empilement référence ref.2.

Les meilleures valeurs d'absorption sont obtenues pour l'empilement comprenant une couche épaisse d'oxyde de titane déposée avec 1,7 % d'oxygène (Emp.2-1) par rapport aux empilements comprenant une couche d'oxyde de titane :

- sans oxygène,
- avec 3,5 % et plus d'oxygène dans l'atmosphère de dépôt.

Il existe donc un seuil limite supérieur de proportion en oxygène au-delà duquel la résistivité et l'absorption sont dégradées.

Il existe donc un seuil limite inférieur de proportion en oxygène au-delà duquel les meilleures valeurs de résistivité et d'absorption sont obtenues.

Dans le cas présent, cette dégradation est observée lorsque l'atmosphère de dépôt pour la couche d'oxyde de titane comprend environ 3,5 % d'$O_2$. Toutefois, il est important de noter que ce seuil critique de $O_2$ dépend également de la cinétique de dépôt c'est à dire de la puissance de la cible et de la nature de la cible (degré de sous stoechiométrie en oxygène). Pour obtenir un effet avantageux, il est nécessaire de contrôler les conditions de dépôt de la couche d'oxyde de titane. Pour cela, pour une pression de dépôt donnée, on réalise des ajouts croissants d'oxygène afin de déterminer la gamme de proportion qui permet d'abaisser l'absorption après traitement thermique sans nuire à la résistivité.

En conclusion, après traitement thermique, via l'introduction d'oxygène pendant le dépôt de la couche épaisse d'oxyde de titane, il est possible d'obtenir une résistance par carré de l'ordre de 10% inférieure à celle d'un empilement de référence c'est dire sans bloqueur de type Ag/ZnO, sans pénalité sur l'absorption (comparaison Ref.2 et Emp.2-2).

**II.3. Influence de la présence d'un revêtement à base d'oxyde de titane présentant un gradient d'oxygène**

Le tableau 10 ci-dessous présente les mesures de Rsq et d'absorption des matériaux en fonction de l'épaisseur de la deuxième couche d'oxyde de titane suroxydé.

[Table 10]

| Tableau | | Emp.12-0 | Emp.12-1 | Emp.12-2 | Emp.12-3 |
|---|---|---|---|---|---|
| Epaisseur TiOx_5% | | 0 nm | 5 nm | 10 nm | 15 nm |
| Rsq Ω/□ | BT | 4,01 | 3,47 | 3,50 | 3,58 |
| | AT | 3,44 | 2,85 | 2,99 | **2,65** |

(suite)

| Tableau | | Emp.12-0 | Emp.12-1 | Emp.12-2 | Emp.12-3 |
|---------|------|----------|----------|----------|----------|
| Abs. % | BT | 9,3 | 11,7 | 11,2 | 10,3 |
| | AT | 7,7 | 6,8 | 6,5 | **5,4** |

Dans cet empilement la couche à base d'oxyde de zinc et d'étain est directement au contact de la couche à base d'oxyde de titane sous oxydée.

La présence d'une couche d'oxyde de titane sur-oxydée, peu importe son épaisseur, permet d'abaisser significativement la résistance carré avant traitement thermique (3,47 vs. 4,01) et après traitement thermique (2,85 vs. 3,44). Cette résistance carré est améliorée peu importe l'épaisseur de la couche d'oxyde de titane suroxydée.

Après traitement thermique, la Rsq demeure élevée pour l'emp.12-0 comprenant une couche de SnZnO en contact direct avec une couche de TiOx sous oxydé avec un gain entre la résistance carré obtenue AT vs. BT faible.

Lorsqu'une couche d'oxyde de titane suroxydée est insérée entre la couche d'oxyde de titane sous oxydée et la couche d'oxyde de zinc et d'étain, la résistance carré demeure faible, avec un gain entre la résistance carré obtenu AT vs. BT pouvant atteindre 25%.

Lorsqu'une couche oxydée d'oxyde de titane est introduite entre le SnZnO et TiOx(0%), on améliore donc la résistance carré. Plus la couche d'oxyde de titane suroxydée est épaisse, plus cette amélioration est importante. Le gain de Rsq augmente de 18 à 25% lorsque l'épaisseur de la couche d'oxyde de titane suroxydée augmente de 5 à 15 nm. Les meilleurs résultats pour la résistance carré après traitement thermique sont obtenus pour la couche d'oxyde de titane la plus épaisse.

L'augmentation de l'épaisseur de la couche d'oxyde de titane suroxydée de 5 nm à 15 nm permet en revanche d'améliorer cette absorption (10,3% vs. 11,7%) avant recuit.

Après traitement thermique, la couche d'oxyde de titane suroxydée d'épaisseur 15 nm associée à la couche à base d'oxyde de zinc et d'étain permet de faire nettement baissée l'absorption : 5,4% vs. 7,7%.

Le tableau 11 ci-dessous présente les mesures de résistance carré et d'absorption dans le cas de matériau comprenant un revêtement à gradient d'oxygène avec deux couches de TiOx déposées avec oxygène.

[Table 11]

| Tableau | | Ref.10 | Emp.13 | Emp.13-1 |
|---------|------|--------|--------|----------|
| Rsq $\Omega/\square$ | BT | 4,50 | 4,45 | 4,55 |
| | AT | 3,42 | 2,89 | 3,20 |
| Abs. % | BT | 8,5 | 9,6 | 7,8 |
| | AT | 6,5 | 6,2 | 5,4 |

Avant traitement thermique, la Rsq n'est ni améliorée ni dégradée comparée à l'empilement de référence (4,50 $\Omega/\square$ vs. 4,55 $\Omega/\square$).

Après traitement thermique, la Rsq est plus basse dans le cas de l'empilement de l'invention Emp.13-1 comprenant la séquence Ag/TiOx_1,7 %/TiOx_5 %/SnZnO (3,20 $\Omega/\square$) par rapport à Emp.13-0 ne comprenant pas de couche de SnZnO (3,42 $\Omega/\square$).

L'absorption est plus basse dans le cas de l'empilement Ag/TiOx_1,7%/TiOx_5%/SnZnO et ce, avant (7,8% vs. 8,5%) et après traitement thermique (5,4% vs. 6,5%). Les deux couches de TiOx sont déposées avec de l'oxygène et sont donc peu absorbantes. Cette faible absorption des deux couches de TiOx est aussi visible dans l'empilement Ag/TiOx_1,7 %/TiOx_5 % comparée à Ag/ZnO référence : 6,2% vs. 6,5%.

En affinant encore plus l'épaisseur de la première couche de TiOx déposée avec O2 (e.g., 1 nm, voire moins comme l'épaisseur d'un bloqueur de TiOx), on peut espérer réduire encore plus l'absorption de l'empilement avant traitement thermique. Dans l'optique d'utiliser ce type de structure pour un produit « annealed » (couche non recuite), il est fondamental de pouvoir réduire l'absorption autant que faire se peut.

**III. Observations microscopiques : Corrosion à chaud et flou**

Dans ces exemples, les traitements thermiques sont réalisés au four NABER à une température de 650°C pendant 10 minutes.

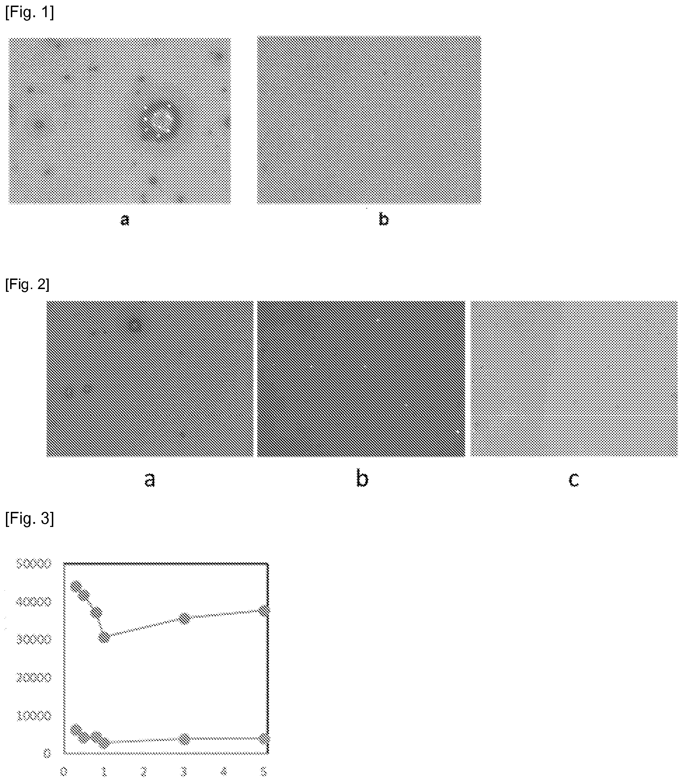

La morphologie des empilements est analysée par microscopie optique (grossissement x50) après traitement thermique. Les figures 1-a, 1-b, 2-a, 2-b, 2-c représentent des images prises après traitement thermique.

[Tableau 12]

|  | Image | Commentaires |
|---|---|---|
| **Réf.1** | 1-a | Flou et nombreux points de corrosion |
| **Réf.10** | 2-a | Flou et nombreux points de corrosion |
| **Emp. 1** | 1-b | Absence de flou et de points de corrosion |
| **Emp.11** | 2-b | Absence de flou et de points de corrosion |
| **Emp.11-1** | 2-c | Absence de flou et de points de corrosion |

Les observations au microscope après traitement thermique ne montrent aucun point de corrosion à chaud pour les empilements selon l'invention. Par ailleurs, les empilements de l'invention ne présentent pas non plus de flou.
La présence de la couche d'oxyde de titane en sur couche au contact de l'argent permet d'empêcher la présence de flou.

**IV. Caractérisation du comportement à la rayure après traitement thermique**

Dans ces exemples, les traitements thermiques sont réalisés au four NABER à une température de 650°C pendant 10 minutes.

**1. Visibilité des rayures** : **Test EST-TT**

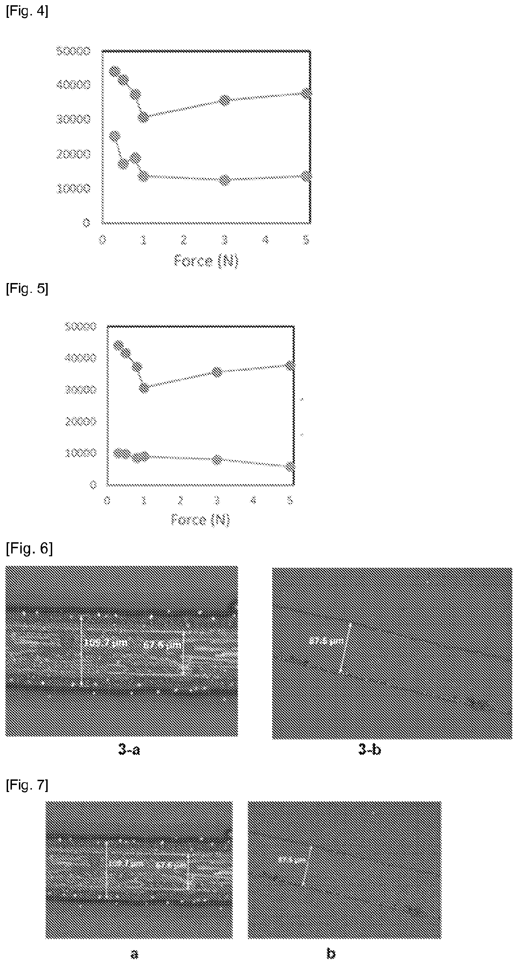

Des images des rayures au test Erichsen à la pointe (EST) à différentes forces et traitement thermique à 650°C (EST-TT) ont été réalisées. Cela illustre le comportement à la rayure de l'empilement après traitement thermique.
Les graphiques des figure 3, 4 et 5 et les tableaux ci-dessous illustrent la visibilité des rayures (en unité arbitraire) en fonction de la force appliquée pour réaliser le test EST-TT.

[Tableau 13]

| Force | 0,3N | 0,5 N | 0,8 N | 1 N | 3 N | 5 N |
|---|---|---|---|---|---|---|
| Ref.1 | 44070 | 41707 | 37331 | 30725 | 35672 | 37747 |
| Emp.1 | 6395 | 4400 | 4465 | 2932 | 3978 | 4079 |

Sur la figure 3, la courbe du haut représente l'empilement de référence Ref.1 et la courbe du bas représente l'empilement Emp.1.
Une nette amélioration dans le cas de l'empilement Emp.1 de l'invention est observée par rapport à l'empilement de référence Ref.1. Les rayures faites entre 0,3 et 5 N sur l'empilement de référence Ref.1 sont environ 10 fois plus visibles que les rayures faites à la même force sur l'empilement 1 de l'invention.

[Table 14]

| Force | 0,3N | 0,5 N | 0,8 N | 1 N | 3 N | 5 N |
|---|---|---|---|---|---|---|
| Emp.11 | 44070 | 41710 | 37330 | 30720 | 35670 | 37750 |
| Emp.11-1 | 16750 | 12120 | 11740 | 11750 | 10030 | 10150 |
| Emp.13-1 | 10170 | 9830 | 8580 | 9030 | 8020 | 5830 |

[Table 15]

| Tableau | Figure 4 | Figure 5 |
|---|---|---|
| **Réf.10** | Courbe du haut | Courbe du haut |
| **Emp.11-1** | Courbe du bas | - |

(suite)

| Tableau | Figure 4 | Figure 5 |
|---------|----------|----------|
| Emp.13-1 | - | Courbe du bas |

Une nette amélioration dans le cas des empilements 11-1 et 13-1 de l'invention est observée par rapport à l'empilement de référence Ref.0.

Les rayures faites entre 0,3 et 5 N sur l'empilement de référence sont bien plus visibles que les rayures faites à la même force sur les empilements de l'invention.

**2. Observation de la corrosion à chaud des rayures**

La figure 6 représente des images prises au microscope des rayures réalisées à 5N. Cela met en évidence la corrosion après traitement thermique de l'empilement de référence (Figure 6-a) et l'absence de corrosion visible pour l'empilement de l'invention (figure 6-b).

[Tableau 14]

| | Image | Commentaires |
|------|-------|--------------|
| **Réf.1** | 6-a | Rayure corrodée |
| **Emp. 1** | 6-b | Rayure non corrodée |

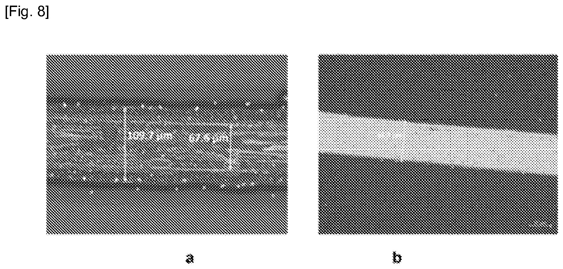

Les figures 7 et 8 explicité par le tableau 12 représentent des images prises au microscope (grossissement X50) des rayures réalisées à 5N. Cela met en évidence la corrosion des rayures après traitement thermique pour l'empilement de référence et l'absence de corrosion pour les empilements de l'invention Emp.11-1 et Emp.13-1.

[Table 12]

| Tableau | Figure 7 | Figure 8 |
|---------|----------|----------|
| **Réf.10** | a | a |
| **Emp.11-1** | b | - |
| **Emp.13-1** | - | b |

**V. Evaluation de la résistance mécanique**

Dans ces exemples, les traitements thermiques sont réalisés au four NABER à une température de 650°C pendant 10 minutes.

Des tests de résistance à la brosse ont été réalisés avant et après traitement thermique (« Erichsen brush test » avant traitement thermique EBT et après traitement thermique TT-EBT).

Chaque échantillon est observé après un certain nombre de cycles : 50, 100, 200, 300 cycles. Le tableau ci-dessous reprend l'ensemble des résultats, Rsq, Abs après traitement thermique, et tests EBT et TT_TT_EBT.

Les cases Ok indiquent une bonne tenue au test EBT ou TT-EBT après 300 cycles. Le chiffre indiqué à coté correspond au nombre de cycles auquel l'échantillon a été soumis.

Les cases Nok indiquent une mauvaise tenue au test EBT ou TT-EBT après 300 cycles. Le chiffre indiqué à coté correspond au nombre de cycles à partir duquel le test devient mauvais (Nok).

**V.1. Couche de TiOx épaisse**

[Tableau 15]

| Tableau | %O$_2$ TiO_X | Rsq Ω/□ | | Absorption | | EBT 300 Cyc. |
|---|---|---|---|---|---|---|
| | | BT | AT | BT | AT | |
| Ref.1 | - | 4,55 | 3,52 | 8,6 % | 6,5 % | Ok |
| Emp.1 | 0 | 4,16 | 3,07 | 13,0 % | 10,5 % | Nok : 50 |
| Ref.2 | - | 4,49 | 3,42 | 8,5 % | 6,5 % | Nok : 200 |
| Emp.2-1 | 0 | 4,05 | 3,14 | 12,2 % | 10.6 % | Nok : 50 |
| Emp.2-2 | 1,7 | 5,01 | **3,02** | 10,7 % | **6,1 %** | Ok |
| Emp.2-3 | 5 | 12,60 | 4,07 | 18.5 % | 9,2 % | Ok |
| Emp.2-4 | 9 | >20 | 7,52 | 27,8 % | 14,2 % | Ok |
| Comp.2-1 | 0 | 4,95 | 3,62 | 13,2% | 9,1% | Nok |
| Emp.2-5 | 0 | 4,26 | 3,29 | 10,6% | 8,2% | Nok |
| Comp.2-2 | 1,7 | 5,32 | 3,55 | 12,1% | 8,4% | OK |
| Emp.2-6 | 1,7 | 4,92 | 3,20 | 10,2% | 6,2% | OK |

Impact sur l'EBT de l'introduction d'oxygène lors du dépôt de la couche de titane

Les tests EBT des exemples Emp.1 et Emp.2-1 comprenant une couche épaisse d'oxyde de titane déposée dans une atmosphère sans oxygène ne sont pas bons. Ces empilements ne tiennent pas 50 cycles.

Les exemples de l'invention comprenant une couche épaisse d'oxyde de titane déposée dans une atmosphère comprenant de l'oxygène ont tous une résistance EBT correcte.

Cela met clairement en évidence l'impact positif sur l'EBT de l'utilisation d'oxygène pour déposer la couche épaisse d'oxyde de titane. Lorsqu'une quantité d'oxygène est introduite pendant le dépôt de la couche d'oxyde de titane, l'EBT devient bon à 300 cycles, et ceci pour toutes les quantités d'oxygène testées, dès 1,7 %.

**V.1. Couche de TiOx épaisse et SnZnO**

[Table 16]

| Tableau | Caract. | Rsq Ω/□ AT | Absorption AT % | EBT 300 Cyc. | TT_EBT 300 Cyc. |
|---|---|---|---|---|---|
| **Ref.10** | ZnO | 3,42 | 6,5 | Nok : 200k | Nok : 50 |
| **Emp.11** | TiOx_1,7 % | 3,03 | 6,2 | Ok | Nok : 50 |
| **Emp.12** | TiOxGrad 0/5 | 3,06 | 6,6 | Nok : 50 | Ok |
| **Emp.11-1** | TiOx_1,7 %-SnZnO | 3,48 | 5,6 | Ok | Ok |
| **Emp.13** | TiOxGrad 1,7/5 | 2,89 | 6,2 | Nok : 50 | Ok |
| **Emp.13-1** | TiOxGrad 1,7/5-SnZnO | 3,20 | 5,4 | Ok | Ok |

L'empilement comprenant une couche d'oxyde de titane déposé en atmosphère oxydante 1,7 % (Emp.11) présente un bon EBT, lié à la présence de O$_2$, mais un mauvais TT-EBT. L'empilement de l'invention Emp.11-1 comprenant en plus une couche d'oxyde de zinc et d'étain permet de maintenir un bon EBT, mais surtout, d'obtenir également un bon TT-EBT. L'insertion de SnZnO en surcouche permet ainsi d'avoir un bon TT-EBT. Cet exemple permet de mettre en évidence le rôle de la combinaison des couches TiOx/SnZnO dans le test mécanique EBT.

On observe une bonne tenue de l'empilement de l'invention Emp.13-1 TiOx gradient /SnZnO à l'EBT et au TT_EBT. En comparant les deux empilements 13-0 et 13-1 différant par la présence de la couche de SnZnO, on constate que cette couche permet bien l'amélioration du test EBT.

## VI. Traitement thermique de type laser

Les matériaux revêtus ont été traités à l'aide d'une ligne laser formée à partir d'un laser à disque. Les conditions suivantes ont été utilisées :

- source laser à disque : Yb :YAG,
- longueur d'onde : 1030nm,
- largeur : 60$\mu$m,
- densité de puissance : 70kW/cm$^2$.

Le traitement laser a été réalisé sur les empilement suivants : Emp.1, Emp.2-1, Emp.2-2, Emp.2-3, Emp.2-4, Emp.2-5, Emp.2-6, Emp.11, Emp.12, Emp.11-1, Emp.12-0, Emp.12-1, Emp.12-2, Emp.12-3, Emp.13, Emp.13-1.

## VI.1. Evolution de la résistance carré et de l'absorption

On a déterminé la résistance carrée et l'absorption comme précédemment.
Bien que les résultats d'absorption et de résistivité soient un peu différents de ceux obtenus par un traitement de type trempe, les mêmes tendances sont observées que ce que l'on observe après traitement thermique de type trempe notamment :

- l'effet bénéfique de l'utilisation d'un revêtement à gradient d'oxydation,
- l'effet bénéfique d'une couche d'oxyde de zinc et d'étain au contact de la couche à base d'oxyde de titane ou du revêtement à gradient d'oxydation.

On a également fait des observations microscopiques.

## VI.2. Observations microscopiques : Corrosion à chaud et flou

Les observations au microscope après traitement thermique laser ne montrent aucun point de corrosion pour les empilements selon l'invention. Par ailleurs, les empilements de l'invention ne présentent pas non plus de flou.

## Conclusion :

Les exemples de l'invention montrent que :

- une couche d'oxyde de titane épaisse permet d'obtenir après traitement thermique :

    - une nette amélioration du flou : absence de flou
    - une diminution de la résistivité,
    - une amélioration de la résistance aux rayures avec :

        - des rayures moins visibles,
        - si présentes, une absence de corrosion à chaud des rayures existantes,

    - pour une Rsq donnée d'abaisser l'épaisseur de la couche d'argent et permettre une augmentation de la transmission lumineuse et du facteur solaire,

- une couche d'oxyde de titane épaisse obtenue à partir d'une cible céramique dans une atmosphère comprenant de l'oxygène permet en outre d'obtenir une résistance mécanique à la brosse satisfaisante avant traitement thermique,
- une couche d'oxyde de titane épaisse obtenue à partir d'une cible céramique dans une atmosphère contrôlée comprenant de faibles quantités d'oxygène, c'est à dire inférieures à 5 % d'oxygène :

    - n'impacte pas significativement l'absorption, avant et après traitement thermique,
    - permet d'obtenir un gain en Rsq après recuit de l'ordre de 10%,
    - permet d'obtenir une résistance à la brosse satisfaisante.

Les exemples concernant le mode de réalisation dans lequel la couche de TiOx est au contact d'une couche d'oxyde de zinc et d'étain montrent que la combinaison de l'invention permet :

- de ne pas augmenter l'absorption après traitement thermique,
- d'obtenir un gain en résistance carré,
- pour une Rsq donnée d'abaisser l'épaisseur de la couche d'argent et permettre une augmentation de la transmission lumineuse et du facteur solaire,
- d'obtenir une bonne résistance à la corrosion et l'absence de flou,
- d'obtenir une bonne résistance au test à la brosse après traitement thermique.

De plus, l'introduction d'une faible quantité d'oxygène (<5%) pendant le dépôt de la première couche de TiOx à partir d'une cible céramique permet d'obtenir après traitement thermique un gain en Rsq de 10-15%, une absorption similaire, voire inférieure à celle d'un empilement Ag/ZnO, ainsi qu'une amélioration du TT_EBT.

**Revendications**

1. Matériau comprenant un substrat transparent revêtu d'un empilement de couches comprenant au moins une couche métallique fonctionnelle à base d'argent et au moins deux revêtements diélectriques, chaque revêtement diélectrique comportant au moins une couche diélectrique, de manière à ce que chaque couche métallique fonctionnelle soit disposée entre deux revêtements diélectriques, l'empilement comprend au moins une couche à base d'oxyde de titane située au-dessus et au contact d'une couche métallique fonctionnelle à base d'argent **caractérisé en ce que** :

   - la couche à base d'oxyde de titane a une épaisseur supérieure ou à égale à 3 nm et se trouve en-dessous et au contact d'une couche diélectrique à base d'oxyde d'étain, cette couche diélectrique a une épaisseur supérieure à 10 nm,
   - au moins un revêtement diélectrique, de préférence chaque revêtement diélectrique comprend au moins une couche comprenant du silicium.

2. Matériau selon l'une quelconque des revendications précédentes **caractérisé en ce que** la couche à base d'oxyde de titane est déposée à partir d'une cible céramique, notamment sous stoechiométrique, dans une atmosphère contrôlée comprenant de l'oxygène.

3. Matériau selon la revendication précédente **caractérisé en ce que** la couche à base d'oxyde de titane est déposée avec un pourcentage d'oxygène en débit volumique représentant entre 0,1 et 10 %.

4. Matériau selon la revendication précédente **caractérisé en ce que** la couche à base d'oxyde de titane est déposée avec un pourcentage d'oxygène en débit volumique représentant entre 0,5 et 5 %.

5. Matériau selon l'une quelconque des revendications précédentes **caractérisé en ce que** l'empilement comprend une couche à base d'oxyde de zinc et d'étain comprenant au moins 20 % en masse d'étain par rapport à la masse totale de zinc et d'étain, située au-dessus et au contact de la couche à base d'oxyde de titane.

6. Matériau selon la revendication précédente **caractérisé en ce que** la couche à base d'oxyde de zinc et d'étain présente une épaisseur :

   - supérieure à 5 nm,
   - inférieure à 40 nm.

7. Matériau selon l'une quelconque des revendications précédentes **caractérisé en ce que** l'empilement comprend en outre une couche comprenant du silicium, située au-dessus et au contact de la couche à base d'oxyde de zinc et d'étain, de préférence une couche à base de nitrure de silicium.

8. Matériau selon l'une quelconque des revendications précédentes **caractérisé en ce que** la couche fonctionnelle métallique est déposée au-dessus et au contact d'une couche à base d'oxyde de zinc.

9. Matériau selon l'une quelconque des revendications précédentes **caractérisé en ce que** la somme des épaisseurs de toutes les couches comprenant du silicium dans le revêtement diélectrique situé entre le substrat et la première couche métallique fonctionnelle à base d'argent est supérieure à 50% de l'épaisseur totale du revêtement diélectrique.

10. Matériau selon l'une quelconque des revendications précédentes **caractérisé en ce que** la somme des épaisseurs de toutes les couches comprenant du silicium à base de nitrure de silicium dans le revêtement diélectrique situé entre le substrat et la première couche d'argent est supérieure à 50% de l'épaisseur totale du revêtement diélectrique.

11. Matériau selon l'une quelconque des revendications précédentes **caractérisé en ce que** la somme des épaisseurs de toutes les couches comprenant du silicium dans chaque revêtement diélectrique est supérieure à 50% de l'épaisseur totale du revêtement diélectrique.

12. Matériau selon l'une quelconque des revendications précédentes **caractérisé en ce que** la somme des épaisseurs de toutes les couches à base d'oxyde présentes dans le revêtement diélectrique situé en dessous de la première couche métallique fonctionnelle est inférieure à 50 % de l'épaisseur totale du revêtement diélectrique.

13. Matériau selon l'une quelconque des revendications précédentes **caractérisé en ce qu'**il comprend :

 - une couche comprenant du silicium,
 - une couche à base d'oxyde de zinc,
 - une couche à base d'argent,
 - une couche à base d'oxyde de titane,
 - une couche comprenant du silicium,
 - éventuellement une couche de protection.

14. Matériau selon l'une quelconque des revendications précédentes caractérisé en ce l'empilement a été soumis à un recuit thermique rapide.

15. Matériau selon l'une quelconque des revendications précédentes **caractérisé en ce que** l'empilement et le substrat ont été soumis à un traitement thermique à une température élevée supérieure à 500 °C tel qu'une trempe, un recuit ou un bombage.

16. Matériau selon l'une quelconque des revendications précédentes **caractérisé en ce que** les couches diélectriques des revêtements ont une épaisseur comprise entre 2 et 50 nm.

17. Matériau selon l'une quelconque des revendications précédentes **caractérisé en ce que** les couches diélectriques des revêtements ont une épaisseur comprise entre 2 et 30 nm.

18. Matériau selon l'une quelconque des revendications précédentes **caractérisé en ce que** l'empilement a une seule couche fonctionnelle à base d'argent.

19. Vitrage comprenant un matériau selon l'une quelconque des revendications 1 à 18 **caractérisé en ce qu'**il est sous forme de vitrage monolithique, feuilleté et/ou multiple.

**Patentansprüche**

1. Material, umfassend ein transparentes Substrat, das mit einer Stapelung von Schichten beschichtet ist, umfassend mindestens eine funktionelle Metallschicht auf Basis von Silber und mindestens zwei dielektrische Beschichtungen, wobei jede dielektrische Beschichtung mindestens eine dielektrische Schicht aufweist, sodass jede funktionelle Metallschicht zwischen zwei dielektrischen Beschichtungen angeordnet ist, wobei die Stapelung mindestens eine Schicht auf Basis von Titanoxid umfasst, die über und in Kontakt mit einer funktionellen Metallschicht auf Basis von Silber gelegen ist,
**dadurch gekennzeichnet, dass:**

 - die Schicht auf Basis von Titanoxid eine Dicke von größer als oder gleich 3 nm aufweist und sich unter und in Kontakt mit einer dielektrischen Schicht auf Basis von Zinnoxid befindet, wobei diese dielektrische Schicht eine Dicke größer als 10 nm besitzt,
 - mindestens eine dielektrische Beschichtung, wobei vorzugsweise jede dielektrische Beschichtung mindestens eine Schicht umfasst, umfassend Silizium.

**2.** Material nach einem der vorstehenden Ansprüche,
**dadurch gekennzeichnet, dass** die Schicht auf Basis von Titanoxid von einem Keramiktarget, insbesondere unterstöchiometrisch, in einer kontrollierten Atmosphäre, umfassend Sauerstoff, abgeschieden wird.

**3.** Material nach dem vorstehenden Anspruch,
**dadurch gekennzeichnet, dass** die Schicht auf Basis von Titanoxid mit einem Sauerstoffanteil in einem Volumenstrom abgeschieden wird, der zwischen 0,1 und 10 % ausmacht.

**4.** Material nach dem vorstehenden Anspruch,
**dadurch gekennzeichnet, dass** die Schicht auf Basis von Titanoxid mit einem Sauerstoffanteil in dem Volumenstrom abgeschieden wird, der zwischen 0,5 und 5 % ausmacht.

**5.** Material nach einem der vorstehenden Ansprüche,
**dadurch gekennzeichnet, dass** die Stapelung eine Schicht auf Basis von Zink- und Zinnoxid umfasst, umfassend mindestens 20 Masse-% Zinn, bezogen auf die Gesamtmasse von Zink und Zinn, die über und in Kontakt mit der Schicht auf Basis von Titanoxid gelegen ist.

**6.** Material nach dem vorstehenden Anspruch,
**dadurch gekennzeichnet, dass** die Schicht auf Basis von Zink- und Zinnoxid eine Dicke vorweist:

- größer als 5 nm,
- kleiner als 40 nm.

**7.** Material nach einem der vorstehenden Ansprüche,
**dadurch gekennzeichnet, dass** die Stapelung ferner eine Schicht umfasst, umfassend Silicium, die über und in Kontakt mit der Schicht auf Basis von Zink- und Zinnoxid gelegen ist, vorzugsweise einer Schicht auf Basis von Siliciumnitrid.

**8.** Material nach einem der vorstehenden Ansprüche,
**dadurch gekennzeichnet, dass** die funktionelle Metallschicht über und in Kontakt mit der Schicht auf Basis von Zinkoxid abgeschieden ist.

**9.** Material nach einem der vorstehenden Ansprüche,
**dadurch gekennzeichnet, dass** die Summe der Dicken aller Schichten, umfassend Silicium, in der dielektrischen Beschichtung, die zwischen dem Substrat und der ersten funktionellen Metallschicht auf Basis von Silber gelegen ist, größer als 50 % der Gesamtdicke der dielektrischen Beschichtung ist.

**10.** Material nach einem der vorstehenden Ansprüche,
**dadurch gekennzeichnet, dass** die Summe der Dicken aller Schichten, umfassend Silizium auf Basis von Siliciumnitrid, in der dielektrischen Beschichtung, die zwischen dem Substrat und der ersten Silberschicht gelegen ist, größer als 50 % der Gesamtdicke der dielektrischen Beschichtung ist.

**11.** Material nach einem der vorstehenden Ansprüche,
**dadurch gekennzeichnet, dass** die Summe der Dicken aller Schichten, umfassend Silizium, in jeder dielektrischen Beschichtung größer als 50 % der Gesamtdicke der dielektrischen Beschichtung ist.

**12.** Material nach einem der vorstehenden Ansprüche,
**dadurch gekennzeichnet, dass** die Summe der Dicken aller Schichten auf Basis von Oxid in der dielektrischen Beschichtung, die unter der ersten funktionellen Metallschicht gelegen ist, kleiner als 50 % der Gesamtdicke der dielektrischen Beschichtung ist.

**13.** Material nach einem der vorstehenden Ansprüche,
**dadurch gekennzeichnet, dass** es umfasst:

- eine Schicht, umfassend Silicium,
- eine Schicht auf Basis von Zinkoxid,
- eine Schicht auf Basis von Silber,
- eine Schicht auf Basis von Titanoxid,

- eine Schicht, umfassend Silicium,
- optional eine Schutzschicht.

**14.** Material nach einem der vorstehenden Ansprüche, **dadurch gekennzeichnet, dass** der Stapel einem schnellen thermischen Glühen unterzogen wurde.

**15.** Material nach einem der vorstehenden Ansprüche, **dadurch gekennzeichnet, dass** die Stapelung und das Substrat einer thermischen Behandlung bei einer erhöhten Temperatur größer als 500 °C unterzogen wurden, wie einer Härtung, einem Glühen oder einem Biegen.

**16.** Material nach einem der vorstehenden Ansprüche, **dadurch gekennzeichnet, dass** die dielektrischen Schichten der Beschichtungen eine Dicke zwischen 2 und 50 nm besitzen.

**17.** Material nach einem der vorstehenden Ansprüche, **dadurch gekennzeichnet, dass** die dielektrischen Schichten der Beschichtungen eine Dicke zwischen 2 und 30 nm besitzen.

**18.** Material nach einem der vorstehenden Ansprüche, **dadurch gekennzeichnet, dass** die Stapelung eine einzelne funktionelle Schicht auf Basis von Silber besitzt.

**19.** Verglasung, umfassend ein Material nach einem der Ansprüche 1 bis 18, **dadurch gekennzeichnet, dass** sie in Form einer Einscheiben-, Verbund- und/oder Mehrfachverglasung ist.

## Claims

**1.** A material comprising a transparent substrate coated with a stack of layers comprising at least one functional metal layer based on silver and at least two dielectric coatings, each dielectric coating having at least one dielectric layer, so that each functional metal layer is positioned between two dielectric coatings, the stack comprises at least one titanium oxide-based layer situated above and in contact with a silver-based functional metallic layer, **characterized in that:**

- the titanium oxide-based layer has a thickness greater than or equal to 3 nm and is below and in contact with a tin oxide-based dielectric layer, this dielectric layer having a thickness greater than 10 nm,
- at least one dielectric coating, preferably each dielectric coating, comprises at least one layer comprising silicon.

**2.** The material according to any one of the preceding claims, **characterized in that** the titanium oxide-based layer is deposited from a ceramic target, notably substoichiometric, in a controlled atmosphere comprising oxygen.

**3.** The material according to the preceding claim, **characterized in that** the titanium oxide-based layer can be deposited with an oxygen percentage by volume flow rate of between 0.1 and 10%.

**4.** The material according to the preceding claim, **characterized in that** the titanium oxide-based layer can be deposited with an oxygen percentage by volume flow rate of between 0.5 and 5%.

**5.** Th material according to any one of the preceding claims, **characterized in that** the stack comprises a zinc tin oxide-based layer comprising at least 20% by mass of tin with respect to the total mass of zinc and tin, located above and in contact with the titanium oxide-based layer.

**6.** The material according to the preceding claim, **characterized in that** the layer based on zinc tin oxide has a thickness:

- of greater than 5 nm,
- of less than 40 nm.

**7.** The material according to any one of the preceding claims, **characterized in that** the stack further comprises a silicon-containing layer above and in contact with the zinc tin oxide layer, preferably a silicon nitride layer.

8. The material according to any one of the preceding claims,
**characterized in that** the metallic functional layer is deposited above and in contact with a zinc oxide-based layer.

9. The material according to any one of the preceding claims,
**characterized in that** the sum of the thicknesses of all the silicon-containing layers present in the dielectric coating located between the substrate and the first silver-based functional metal layer is greater than 50% of the total thickness of the dielectric coating.

10. The material according to any one of the preceding claims,
**characterized in that** the sum of the thicknesses of all the layers comprising silicon nitride-based silicon present in the dielectric coating located between the substrate and the first silver layer is greater than 50% of the total thickness of the dielectric coating.

11. The material according to any one of the preceding claims,
**characterized in that** the sum of the thicknesses of all the layers comprising silicon in each dielectric coating is greater than 50% of the total thickness of the dielectric coating.

12. The material according to any one of the preceding claims,
**characterized in that** the sum of the thicknesses of all the oxide-based layers present in the dielectric coating located between the first functional metal layer is less than 50% of the total thickness of the dielectric coating.

13. The material according to any one of the preceding claims,
**characterized in that** it comprises:

- a silicon-containing layer,
- a zinc oxide-based layer,
- a silver-based layer,
- a titanium oxide-based layer,
- a silicon-containing layer,
- optionally a protective layer.

14. The material according to any one of the preceding claims,
**characterized in that** the stack has been subjected to rapid thermal annealing.

15. The material according to any one of the preceding claims,
**characterized in that** the stack and the substrate have been subjected to a heat treatment at a high temperature greater than 500°C, such as a tempering, an annealing or a bending.

16. The material according to any one of the preceding claims,
**characterized in that** the dielectric layers of the coatings have a thickness of between 2 and 50 nm.

17. The material according to any one of the preceding claims,
**characterized in that** the dielectric layers have a thickness of between 2 and 30 nm.

18. The material according to any one of the preceding claims,
**characterized in that** the stack has a single silver-based functional layer.

19. A glazing comprising a material according to any one of claims 1 to 18,
**characterized in that** it is in the form of a monolithic, laminated and/or multiple glazing.

[Fig. 1]

a         b

[Fig. 2]

a       b       c

[Fig. 3]

[Fig. 4]

[Fig. 5]

[Fig. 6]

3-a                    3-b

[Fig. 7]

a                      b

[Fig. 8]

a            b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2893023 A1
- WO 2006122900 A1
- FR 3088633 A1
- WO 2006067102 A2
- WO 2008096089 A
- WO 2015185848 A